(19) Europäisches Patentamt / European Patent Office / Office européen des brevets

(11) **EP 1 975 445 B1**

(12) **EUROPEAN PATENT SPECIFICATION**

(45) Date of publication and mention of the grant of the patent:
**28.06.2023  Bulletin 2023/26**

(21) Application number: **08003307.9**

(22) Date of filing: **22.02.2008**

(51) International Patent Classification (IPC):
***F16D 48/06*** *(2006.01)*

(52) Cooperative Patent Classification (CPC):
**F16D 48/06;** F16D 2500/1117; F16D 2500/3026;
F16D 2500/30406; F16D 2500/30421;
F16D 2500/3108; F16D 2500/50287;
F16D 2500/5108; F16D 2500/70258;
F16D 2500/70424; F16D 2500/7044

(54) **Vehicle having a clutch failure detection system and method for detecting failure**

Fahrzeug mit einem System zur Erkennung von Kupplungsfehlern und Verfahren zur Fehlererkennung

Véhicule disposant d'un système de détection de défaillance d'embrayage et procédé de détection de défaillance

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.09.2007   JP 2007231134**
**23.02.2007   JP 2007043645**

(43) Date of publication of application:
**01.10.2008   Bulletin 2008/40**

(73) Proprietor: **Yamaha Hatsudoki Kabushiki Kaisha**
**Iwata-shi, Shizuoka 438-8501 (JP)**

(72) Inventor: **Minami, Kengo**
**Iwata-shi**
**Shizuoka-ken 438-8501 (JP)**

(74) Representative: **Grünecker Patent- und**
**Rechtsanwälte**
**PartG mbB**
**Leopoldstraße 4**
**80802 München (DE)**

(56) References cited:
**EP-A2- 1 681 496          DE-A1-102006 042 608**
**DE-A1-102007 050 301**

**Description**

The present invention relates to a vehicle according to the preamble of independent claim 1 and to a method for detecting a clutch failure according to the preamble of independent claim 5. In particular it is discussed technology for detecting a failure of a clutch mounted on a vehicle and to a clutch failure detection system, a straddle-type vehicle, and a method for detecting same.

Such a vehicle having a clutch provided in a toque transmission path as well as such a method for detecting a clutch failure can be taken from the prior art document EP 1 681 496 A2. Said prior art document relates to a method and a respective device for operating an automatic clutch in combination with a transmission and an engine. In particular, it is suggested to measure the transmission input torque directly on the shaft and to determine the characteristic curve of the clutch by means of measured transmission torques and measured clutch position. The characteristic curve is learned and stored as a comparative curve, wherein failure is detected in case actual value of the input torque and the actual clutch position deviate from such comparative curve. By means of repeating such learning process over service time of the clutch, wear of the clutch can be determined and brought to the attention of the user.

Some clutches mounted on vehicles are provided with a drive-side member (for example, friction disk), which rotates upon receipt of engine torque, and a driven-side member (for example, clutch disk), which is pressed by the drive-side member to rotate together with the drive-side member. The drive-side member and the driven-side member of such a clutch wear out after long service, which can lower the degree of engagement of the clutch relative to the initial degree. In addition, in the case hydraulic pressure is used to engage or disengage the clutch, bubbles are formed within a hydraulic hose, which can cause incomplete clutch disengagement.

Conventional vehicles, which actuate an actuator to engage or disengage the clutch according to a rider's gear shifting instructions or the like, employ the technology for detecting such clutch failures and informing the rider of the failures. For example, a device, disclosed in Patent Document 1, is provided with a potentiometer for detecting the position of a movable part of an actuator or the like designed to engage or disengage the clutch (hereinafter referred to as clutch position). Based on the detected clutch position, the device determines the presence or absence of a clutch failure. Specifically, this device determines that a failure has occurred to the clutch, if the clutch position, at which the driven-side member of the clutch starts rotating, falls outside an appropriate range that is predetermined at the stage of manufacturing.

Patent Document 1: JP-B-Hei 7-56299

However, when the vehicle runs downslope, the clutch position, at which the driven-side member of the clutch starts rotating, is closer to a clutch position, at which the clutch is disengaged, compared to when the vehicle runs on a flat road. Meanwhile, when the vehicle runs upslope, the clutch position, at which the driven-side member of the clutch starts rotating, is closer to a clutch position, at which the clutch is engaged, compared to when the vehicle runs on a flat road. Thus, it is needed to consider the gradient of the slope and the like in predetermining an appropriate range of the clutch position for the device, disclosed in the Patent Document 1. This makes it difficult to predetermine the appropriate range that leads to accurate failure detection.

The present invention is made in view of the foregoing problems, and an object of the invention is to provide a vehicle with a failure detection system for detecting a clutch failure, in particular a straddle-type vehicle, and a method for detecting a failure, which reduce the impact of the road gradient on the failure detection.

For the apparatus aspect, this objective is solved by a vehicle having the features of independent claim 1. Preferred embodiments are laid down in the dependent claims. Accordingly it is provided a vehicle having a clutch provided in a torque transmission path; a clutch actuation mechanism for changing relative positions of a drive-side member and a driven-side member of the clutch; a clutch position detector for detecting a position of the clutch actuation mechanism as a clutch position; a torque obtaining section for obtaining torque transmitted from the drive-side member to a downstream mechanism in the torque transmission path as an actual transmission torque, the downstream mechanism including the driven-side member; and a failure detecting section for detecting a failure of the clutch based on the transmission torque and the clutch position.

Preferably, the torque obtaining section is configured to calculate the actual transmission torque based on torque outputted from a driving source and inertia torque produced in a mechanism upstream of the drive-side member in the torque transmission path.

The failure detecting section includes a condition determining section for determining whether or not a vehicle operating condition satisfies a predetermined condition, and based on the determination result, wherein the failure detection section implements the processing for detecting a failure of the clutch.

The predetermined condition relates to a vehicle speed, or wherein the predetermined condition relates to a difference in rotational speed between the drive-side member and the driven-side member of the clutch, or wherein the predetermined condition relates to an amount of the actual transmission torque.

Alternatively, the vehicle further comprises a control unit for actuating the clutch actuation mechanism according to a difference between the actual transmission torque and the target transmission torque that is supposed to be transmitted from the drive-side member to the downstream mechanism in order to control the relative positions, wherein the predetermined condition relates to the difference between the target torque and the transmission torque.

According to another preferred embodiment, the vehicle further comprises a storage unit for storing in advance information on the relationship between the actual transmission torque and the clutch position, wherein the failure detecting section refers to the information stored in the storage unit based on the actual transmission torque, which is obtained by the torque obtaining section, and the clutch position, which is obtained by the position detector, to detect a failure of the clutch.

Preferably, the failure detecting section obtains the clutch position and the transmission torque several times in the process that the clutch is switched from a disengaged state to an engaged state, and based on several data of the clutch position and the actual transmission torque, detects a failure of the clutch.

For the method aspect, this objective is solved by a method for detecting a clutch failure comprising the steps of: detecting a position of a clutch actuation mechanism for changing relative positions of a drive-side member and a driven-side member of a clutch as a clutch position; obtaining torque transmitted from the drive-side member to a downstream mechanism in a torque transmission path as transmission torque, the downstream mechanism including the driven-side member; and detecting a failure of the clutch based on the transmission torque and the clutch position.

In the following, the present invention is explained in greater detail with respect to several embodiments thereof in conjunction with the accompanying drawings, wherein:

FIG. 1             is a side view of a motorcycle provided with a failure detection system according to an embodiment of the present teaching,

FIG. 2             is a schematic view of a mechanism located on a torque transmission path of the motorcycle,

FIG. 3             is a block diagram illustrating a configuration of the failure detection system,

FIG. 4             is a block diagram illustrating processing functions of a control unit,

FIG. 5             is a graph illustrating the relationship between the accelerator displacement and the target transmission torque Ttg,

FIG. 6             is a graph illustrating the relationship between a difference between target transmission torque and actual transmission torque, and a command actuation amount obtained from an actuation amount relational expression,

FIG. 7             is a graph illustrating the relationship between a difference between target transmission torque and actual transmission torque, and a command actuation amount obtained from a disengagement actuation amount relational expression,

FIG. 8             illustrates an example of a failure determination table provided for the processing for determining the presence or absence of a failure,

FIG. 9             is a flowchart illustrating an example of the processing steps executed by the control unit in order to control the degree of engagement of the clutch,

FIG. 10            is a flowchart illustrating an example of the processing steps executed by the control unit in order to detect a failure of the clutch, and

FIGs. 11(a) to 11(c)    are time charts respectively showing changes in target transmission torque, actual transmission torque and degree of engagement of the clutch with respect to time when the vehicle starts up.

Description of Reference Numerals;

1: motorcycle
2: front wheel
3: rear wheel
4: front fork

5: handlebars
6a:indicator
10: clutch controller
11: control unit
11a:actual torque obtaining section
11d:target torque obtaining section
11e:clutch actuator control section
11f:failure detecting section
11h:shift actuator control section
12: storage unit
13: clutch actuator drive circuit
14: clutch actuator
15: shift actuator drive circuit
16: shift actuator
17: accelerator operation detector
18: engine speed detector
19: vehicle speed detector
20: clutch actuation mechanism
21: gear position detector
22: clutch position detector
23a, 23b:clutch rotational speed detector
9a:shift-up switch
9b:shift-down switch
30: engine
31: cylinder
32: piston
33: intake port
34: crankshaft
35: intake pipe
36: primary deceleration mechanism
37: throttle body
40: clutch
41: drive-side member
42: driven-side member
43: push rod
50: secondary deceleration mechanism
51: gearbox
52: main shaft
53a, 54a, 53b, 54b:shift gear
55: countershaft
56: gearshift mechanism
57: transmission mechanism

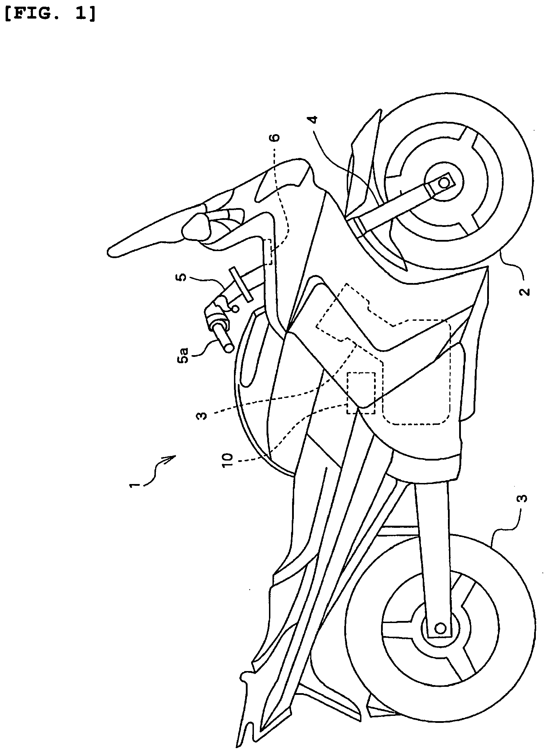

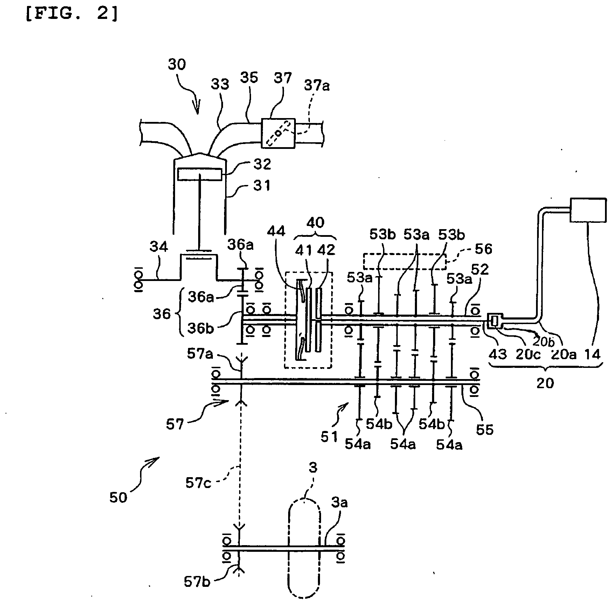

A description will hereinafter be made of an embodiment of the present teaching with reference to the drawings. FIG. 1 is a side view of a motorcycle 1 provided with a clutch failure detection system 10 as an example of the embodiment of the present teaching. FIG. 2 is a schematic view of a mechanism located on a torque transmission path of the motorcycle 1.

As shown in FIG. 1 or FIG. 2, the motorcycle 1 is provided not only with the failure detection system 10, but also with an engine 30, a primary deceleration mechanism 36, a clutch 40, a secondary deceleration mechanism 50, a front wheel 2, and a rear wheel 3. In the example herein described, the motorcycle 1 is a semi-automatic vehicle which changes shift gears of a gearbox 51 without the need for a rider to operate the clutch. The failure detection system 10 detects a failure of the clutch 40, while controlling the degree of engagement of the clutch 40.

As shown in FIG. 1, the front wheel 2 is located at a front part of a vehicle body, and supported by lower ends of a front fork 4. Handlebars 5 are connected to the top of the front fork 4. An instrument panel 6 having thereon a speed meter and a tachometer is installed in front of the handlebars 5. An acceleration grip 5a to be gripped by a rider is mounted to the right end of the handlebars 5. The acceleration grip 5a is connected to a throttle valve 37a provided in a throttle body 37 (see FIG. 2). The throttle valve 37a is opened according to rider's accelerator operation, and a certain amount of air, which depends on the opening of the throttle valve 37a, is delivered to the engine 30. The motorcycle 1 may be provided with an electronically-controlled throttle device. In this case, there are provided a sensor for detecting the rider's accelerator operation and an actuator for rotating the throttle valve 37a according to the accelerator operation detected by the sensor.

As shown in FIG. 2, the engine 30 has a cylinder 31, a piston 32, an intake port 33, and a crankshaft 34. The throttle body 37 is connected to the intake port 33 via an intake pipe 35.

The throttle valve 37a is placed within an intake passage of the throttle body 37. Mixture of air, which is supplied from the throttle body 37, and fuel, which is supplied from a fuel supplier (not shown, for example, injector or carburetor), flows into an interior of the cylinder 31. Then, burning the air-fuel mixture causes the piston 32 to reciprocate within the cylinder 31. The reciprocating motion of the piston 32 is converted into rotating motion by the crankshaft 34, thereby outputting torque from the engine 30.

The primary deceleration mechanism 36 includes: a drive-side primary deceleration gear 36a, which operates in conjunction with the crankshaft 34; and a driven-side primary deceleration gear 36b, which meshes with the primary deceleration gear 36a. The primary deceleration mechanism 36 decelerates the rotation of the crankshaft 34 at a gear ratio between these gears.

The clutch 40 transmits torque outputted from the engine 30 to the downstream side of the clutch 40 or interrupts transmission of the torque. The clutch 40 is a friction clutch, for example, and is provided with a drive-side member 41 and a driven-side member 42. The drive-side member 41 includes a friction disk, for example, and rotates together with the primary reduction gear 36b. The driven-side member 42 includes a clutch disk, for example, and rotates together with a main shaft 52. The drive-side member 41 and the driven-side member 42 are pressed against each other by elastic force of a clutch spring 44 at the time of engaging the clutch 40, so that the torque of the engine 30 is transmitted from the drive-side member 41 to the driven-side member 42. In turn, at the time of disengaging the clutch 40, the driven-side member 42 and the drive-side member 41 are moved away from each other, so that torque transmission from the drive-side member 41 is interrupted. As will be discussed later, the failure detection system 10 is provided with a clutch actuation mechanism 20 that includes a clutch actuator 14. The clutch actuation mechanism 20 performs engaging operation and disengaging operation of the clutch 40.

The secondary speed reducing mechanism 50 is designed to decelerate the rotation of the main shaft 52 and transmit the decelerated rotation to an axle 3a of the rear wheel 3. In this example, the secondary speed reducing mechanism 50 is provided with a gearbox 51 and a transmission mechanism 57. The gearbox 51 is a mechanism to change reduction ratios, such as a constant-mesh gearbox and a selective-sliding gearbox.

The gearbox 51 has on the main shaft 52 plural shift gears 53a (for example, first-speed gear, second-speed gear, third/fourth-speed gear) and shift gears 53b (for example, fifth-speed gear and six-speed gear). Also, the gearbox 51 has on the countershaft 55 plural shift gears 54a (for example, first-speed gear, second-speed gear, third/fourth-speed gear) and shift gears 54b (for example, fifth-speed gear and six-speed gear). The shift gears 53a are spline-connected to the main shaft 52 and operates in conjunction with the main shaft 52. The shift gears 54a are provided such that they turn free to the countershaft 55, and mesh with the corresponding shift gears 53a, respectively. The shift gears 53b are provided such that they run idle to the main shaft 52. The shift gears 54b mesh with the corresponding shift gears 53b, respectively, while being spline-connected to the countershaft 55 to operate in conjunction with the countershaft 55.

The gearbox 51 is also provided with a gearshift mechanism 56. The gearshift mechanism 56 includes a shift fork and a shift drum, for example, and selectively moves the shift gears 53a, 53b, 54a, 54b in the axial direction of the main shaft 52 or the countershaft 55. Then, the gearshift mechanism 56 causes the shift gears 53b, 54a, which are provided to turn free to the corresponding shafts, to connect with the adjacent shift gears 53a, 54b, which operate in conjunction with the corresponding shafts. This changes the pairs of shift gears to transmit torque from the main shaft 52 to the countershaft 55. The gearshift mechanism 56 is actuated by power inputted from a shift actuator 16 to be discussed later.

The transmission mechanism 57 is designed to decelerate the rotation of the countershaft 55 and transmit the decelerated rotation to the axle 3a of the rear wheel 3. In this example, the transmission mechanism 57 includes: a drive-side member 57a (for example, drive-side sprocket), which operates in conjunction with the countershaft 55; a driven-side member 57b (for example, driven-side sprocket), which operates in conjunction with the axle 3a; and a transmission member 57c (for example, chain), which transmits torque from the drive-side member 57a to the driven-side member 57b.

Torque outputted from the engine 30 is transmitted to the drive-side member 41 of the clutch 40 via the primary speed reducing mechanism 36. The torque transmitted to the drive-side member 41 is transmitted to the axle 3a of the rear wheel 3 via the driven-side member 42, the gearbox 51, and the transmission mechanism 57 in the case that the clutch 40 is engaged or that the drive-side member 41 and the driven-side member 42 contact each other, that is, the clutch 40 is in a half-clutch state.

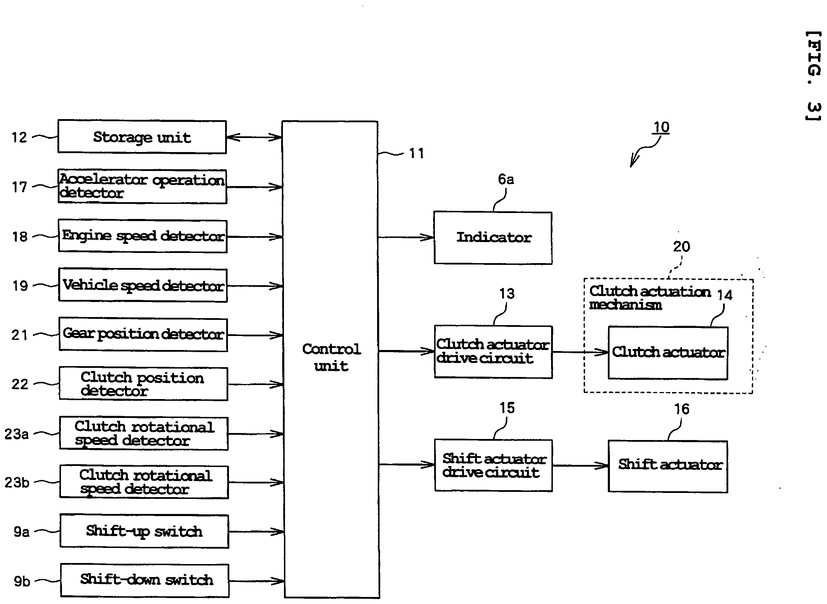

Description is made of the failure detection system 10. FIG. 3 is a block diagram illustrating a configuration of the failure detection system 10. As shown in FIG. 3, the failure detection system 10 is provided with a control unit 11, a storage unit 12, a clutch actuator drive circuit 13, the clutch actuation mechanism 20, a shift actuator drive circuit 15, a shift actuator 16, an accelerator operation detector 17, an engine speed detector 18, a vehicle speed detector 19, a gear position detector 21, a clutch position detector 22, clutch rotational speed detectors 23a, 23b, and an indicator 6a. The control unit 11 is connected to a shift-up switch 9a and a shift-down switch 9b.

The control unit 11 includes a central processing unit (CPU), and actuates the clutch actuation mechanism 20 in accordance with programs stored in the storage unit 12 to control the degree of engagement of the clutch 40. The control unit 11 also actuates the shift actuator 16 to change the deceleration ratios of the gearbox 51. Further, the control unit 11 executes the processing for detecting the presence or absence of a failure of the clutch 40. The processing executed by the control unit 11 will be discussed in detail later.

The storage unit 12 includes a nonvolatile memory and a volatile memory. The storage unit 12 stores programs to be executed by the control unit 11 and tables or expressions to be used for the processing in the control unit 11. These tables and expressions will be discussed in details later.

The clutch actuator drive circuit 13 supplies electric power to drive the clutch actuator 14 in accordance with a control signal inputted from the control unit 11.

The clutch actuation mechanism 20 is designed to change the relative positions of the drive-side member 41 and the driven-side member 42 or change the degree of engagement of the clutch 40 according to the control signal outputted from the control unit 11. As an example shown in FIG. 2, the clutch actuation mechanism 20 is provided with the clutch actuator 14, which includes a motor, a hydraulic hose 20a, a piston 20c, a push rod 43, and the like. Oil is filled within the hydraulic hose 20a in order to transmit force outputted from the clutch actuator 14 to a cylinder 20b. The piston 20c is located within the cylinder 20b and uses hydraulic pressure within the hydraulic hose 20a to press the push rod 43 or release the pushed push rod 43. When the push rod 43 is pressed by the clutch actuator 14 through hydraulic pressure, it moves the drive-side member 41 and the driven-side member 42 away from each other against the elastic force of the clutch spring 44, so that the clutch 40 is disengaged. In contrast, when the pressed push rod 43 is released by the clutch actuator 14, it returns to its original position (the position at the time when the clutch 40 is engaged) using the elastic force of the clutch spring 44. Thus, the drive-side member 41 and the driven-side member 42 approach each other, so that the clutch 40 is engaged. When the clutch 40 is in a half-clutch state under which only part of torque of the engine 30 is transmitted from the drive-side member 41 to the driven-side member 42, the clutch actuation mechanism 20 changes the degree of engagement of the clutch 40 gradually according to the control signal from the control unit 11.

The shift actuator drive circuit 15 supplies electric power to drive the shift actuator 16 in accordance with the control signal inputted from the control unit 11. The shift actuator 16 includes, for example, a motor, and receives the electric power outputted from the shift actuator drive circuit 15 to actuate the gearshift mechanism 56 of the gearbox 51. The gearshift mechanism 56 changes the shift gears 53a, 53b, 54a, 54b to transmit toque from the main shaft 52 to the countershaft 55, in order to change the deceleration ratios.

The accelerator operation detector 17 is designed to detect an amount of the accelerator operation by the rider (hereinafter referred to as accelerator displacement (for example, throttle opening)). Examples of the accelerator operation detector 17 are a throttle position sensor mounted to the throttle body 37 and an accelerator position sensor mounted to the accelerator grip 5a to detect a rotation angle of the accelerator grip 5a. The accelerator operation detector 17 outputs an electric signal to the control unit 11 according to the accelerator displacement. The control unit 11 detects the accelerator displacement by the rider based on the electric signal.

The engine speed detector 18 is designed to detect a rotational speed of the engine 30 (hereinafter referred to as engine speed). Example of the engine speed detector 18 are a crank angle sensor for outputting a pulse signal with a frequency according to the rotational speed of the crankshaft 43 or the primary reduction gears 36a, 36b and a tachogenerator for outputting a voltage signal according to the rotational speed thereof. The control unit 11 calculates the engine speed based on the signal inputted from the engine speed detector 18.

The vehicle speed detector 19 is designed to detect a vehicle speed, and outputs a signal to the control unit 11 according to, for example, the rotational speed of the axle 3a of the rear wheel 3 or the countershaft 55 (hereinafter the signal is referred to as vehicle speed signal). The control unit 11 calculates the vehicle speed based on the vehicle speed signal.

The gear position detector 21 is designed to detect positions of the shift gears 53a, 53b, 54a, 54b provided movably in the axial direction of the countershaft 55 or the main shaft 52. An example of the gear position detector 21 is a potentiometer mounted to the gearshift mechanism 56 or the shift actuator 16. The gear position detector 21 outputs a signal to the control unit 11 according to the positions of the shift gears 53a, 53b, 54a, 54b. Based on the input signal, the control unit 11 detects that some of the shift gears 53a, 53b, 54a, 54b have finished moving and the deceleration ratio of the gearbox 51 has already changed.

The clutch position detector 22 is designed to detect the position of a movable part of the clutch actuation mechanism 20 (for example, the rotation angle of an output shaft of the clutch actuator 14, the axial position of the piston rod 43, or the like (hereinafter referred to as clutch position Pc)). An example of the clutch position detector 22 is a potentiometer for outputting a signal according to the axial position of the push rod 43 or the position of the piston 20c in the cylinder 20b. Alternatively, the clutch position detector 22 may be a potentiometer for outputting a signal according to the rotation angle of the output shaft of the motor included in the clutch actuator 14. Based on the signal inputted from the clutch position detector 22, the control unit 11 detects the clutch position Pc. In the case where any failure, such as wear-out of the drive-side member 41 or the driven-side member 42 and bubbles within the hydraulic hose 20a, does not occur to the clutch 40, the clutch position Pc, detected by the clutch position detector 22, corresponds to the degree of engagement of the clutch 40 achieved at the point in time of the detection of the clutch position Pc. In contrast, if such a failure occurs, it causes a discrepancy between the detected clutch position Pc and the actual degree of engagement of the clutch 40. As will be discussed later, this discrepancy problem is detected by the control unit 11.

The clutch rotational speed detector 23a is designed to detect the rotational speed of the drive-side member 41 of the clutch 40. Examples of the clutch rotational speed detector 23a are a rotary encoder for outputting a pulse signal with a frequency according to the rotational speed of the drive-side member 41 and a tachogenerator for outputting a voltage signal according to the rotational speed of the drive-side member 41. In turn, the clutch rotational speed detector 23b is designed to detect the rotational speed of the driven-side member 42 of the clutch 40. Examples of the clutch rotational speed detector 23b are a rotary encoder and a tachogenerator, as described for the clutch rotational speed detector 23a.

The shift-up switch 9a and the shift-down switch 9b are designed for the rider to provide instructions to change the deceleration ratios of the gearbox 51. These switches 9a, 9b output a signal to the control unit 11 according to the instructions of gear shifting. According to the input signal, the control unit 11 actuates the shift actuator 16 and the clutch actuation mechanism 20 to change the shift gears 53a, 53b, 54a, 54b of the gearbox 51.

The indicator 6a is disposed, for example, on the instrument panel 6, and is provided with an alarm lamp designed to inform the rider of the occurrence of a failure of the clutch 40, a meter designed to indicate the severity of the failure, or the like. The indicator 6a lights up the alarm lamp or the like according to the signal inputted from the control unit 11.

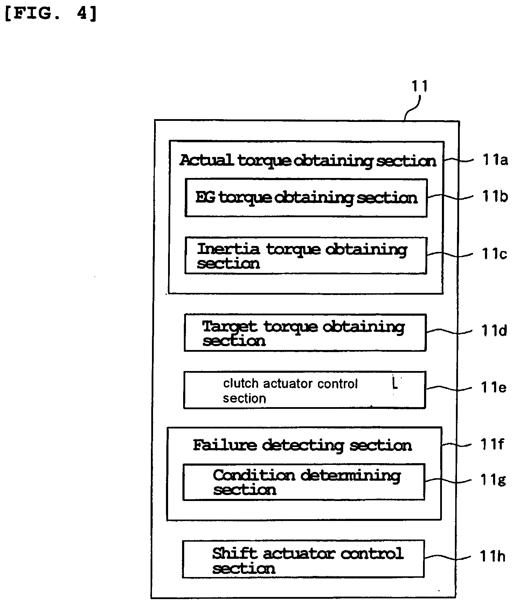

Now, description is made of the processing executed by the control unit 11. The control unit 11 obtains torque transmitted via the clutch 40 during engaging operation of the clutch 40 (switching the clutch 40 from the disengaged state to the engaged state). Based on the obtained torque and torque that is supposed to be transmitted via the clutch 40, the control unit 11 actuates the clutch actuation mechanism 20 to control the degree of engagement of the clutch 40. The control unit 11 also executes the processing for detecting a failure of the clutch 40 during engaging operation of the clutch 40. FIG. 4 is a block diagram illustrating the processing functions of the control unit 11. As shown in FIG. 4, the control unit 11 includes: an actual torque obtaining section 11a; a target torque obtaining section 11d, a clutch actuator control section 11e; a failure detecting section 11f; and a shift actuator control section 11h. The actual torque obtaining section 11a includes an EG torque obtaining section 11b and an inertia torque obtaining section 11c. The failure detecting section 11f includes a condition determining section 11g. The respective functions of the control unit 11 will be described in details below.

Description is first made of the actual torque obtaining section 11a. The actual torque obtaining section 11a obtains torque transmitted from the drive-side member 41 to a downstream mechanism (such as the driven-side member 42, the secondary deceleration mechanism 50 and the axle 3a in this example) in the torque transmission path including the driven-side member 42 (hereinafter the torque is referred to as actual transmission torque Tac). Specifically, the actual torque obtaining section 11a calculates the actual transmission torque Tac based on the torque TEac outputted from the engine 30 (hereinafter referred to as EG torque) and based on the torque Tlac produced due to the inertia of a mechanism (such as the crankshaft 34, the piston 32 and the primary deceleration mechanism 36) upstream of the drive-side member 41 in the torque transmission path (hereinafter the torque is referred to as EG-side inertia torque). The actual torque obtaining section 11a performs this processing in a predetermined sampling cycle (for example, several milliseconds) during engaging operation of the clutch 40 in which the drive-side member 41 and the driven-side member 42 approach each other. This processing is described in details below. The actual transmission torque Tac is herein described as torque transmitted to the driven-side member 42 in the above downstream mechanism.

The storage unit 12 stores in advance a table that establishes the correspondence between the EG torque TEac, and the engine speed and the accelerator displacement (hereinafter the table is referred to as EG torque table). Then, the EG torque obtaining section 11b detects the accelerator displacement based on the signal inputted from the accelerator operation detector 17 in a predetermined sampling cycle during engaging operation of the clutch 40, while detecting the engine speed based on the signal inputted from the engine speed detector 18. Then, the EG torque obtaining section 11b refers to the EG torque table to obtain the EG torque TEac that corresponds to the detected accelerator displacement and engine speed.

In place of the EG torque table, the storage unit 12 may store in advance a relational expression that represents the relationship between the engine speed, the accelerator displacement and the EG torque TEac. In this case, the EG torque obtaining section 11b substitutes the detected engine speed and accelerator displacement into the relational expression in order to calculate the EG torque TEac.

Alternatively, the EG torque obtaining section 11b may obtain the EG torque TEac based on pressure of air flowing through the interior of the intake pipe 35 (hereinafter the pressure is referred to as intake pressure). For example, the storage unit 12 stores a table that establishes the correspondence between the EG torque TEac, and the intake pressure and the engine speed. In addition, a pressure sensor for outputting a signal according to the intake pressure is disposed in the intake pipe 35. In this case, the EG torque obtaining section 11b detects the engine speed at the time when the crank angle is a predetermined value (for example, at the end of intake stroke), while detecting the intake pressure based on the signal inputted from the pressure sensor. Then, the EG torque obtaining section 11b refers to the table stored in the storage unit 12 to obtain the EG torque TEac that corresponds to the detected intake pressure and engine speed.

The EG-side inertia torque Tlac is a value determined according to the variation in engine speed $\Omega e$ per unit time ($d\Omega e / dt$, hereinafter referred to as rate-of-change of EG speed). The storage unit 12 stores in advance an expression that associates the EG-side inertia torque Tlac and the rate-of-change of EG speed ($d\Omega e / dt$) with each other.

Specifically, the storage unit 12 stores in advance an expression, in which the EG-side inertia torque Tlac is equal to a value ($I \times (d\Omega e / dt)$) obtained by multiplying the inertial moment I on the mechanism upstream of the drive-side member 41 by the rate-of-change of EG speed ($d\Omega e / dt$). The inertia torque obtaining section 11c calculates the rate-of-change of EG speed ($d\Omega e / dt$) based on the signal inputted from the engine speed detector 18. Then, the inertia torque obtaining section 11c multiplies the rate-of-change of EG speed ($d\Omega e / dt$) by the inertial moment I on the mechanism upstream of the drive-side member 41, and defines the multiplication result ($I \times (d\Omega e / dt)$) as EG-side inertia torque Tlac. Alternatively, the storage unit 12 may store in advance a table that establishes the correspondence between the rate-of-change of EG speed ($d\Omega e / dt$) and the EG-side inertia torque Tlac. In this case, the inertia torque obtaining section 11c refers to the table to obtain the EG-side inertia torque Tlac that corresponds to the calculated rate-of-change of EG speed.

As described above, the actual transmission torque obtaining section 11a obtains the actual transmission torque Tac based on the EG torque TEac and the EG-side inertia torque Tlac. For example, the storage unit 12 stores in advance an expression that represents the relationship between the actual transmission torque Tac, the EG torque TEac and the EG-side inertia torque Tlac. Also, the actual transmission torque obtaining section 11a substitutes the actual transmission torque Tac and the EG-side inertia torque Tlac, which are respectively obtained from the aforementioned processing, into the expression in order to calculate the actual transmission torque Tac. For example, the storage unit 12 stores the following expression (1).

$$Tac = (TEac - Tlac) \times Pratio \cdots (1)$$

In this expression, Pratio represents the gear ratio of the primary deceleration mechanism 36 (Pratio = the number of teeth of the driven-side primary deceleration gear 36b / the number of teeth of the drive-side primary deceleration gear 36a). In this case, the actual torque obtaining section 11a subtracts the EG-side inertia torque Tlac from the EG torque TEac obtained from the aforementioned processing. Then, the actual torque obtaining section 11a multiplies the subtraction result (TEac - Tlac) by the gear ratio Pratio, and defines the obtained value (($TEac - Tlac) \times Pratio$) as actual transmission torque Tac.

The processing for calculating the actual transmission torque Tac is not limited to the aforementioned processing. For example, the storage unit 12 may store in advance a table or an expression that establishes the correspondence between the actual transmission torque Tac, and the engine speed $\Omega e$, the accelerator displacement and the rate-of-change of EG speed ($d\Omega e / dt$). In this case, the actual torque obtaining section 11a uses the table or the expression to directly obtain the actual transmission torque Tac from the engine speed $\Omega e$, the rate-of-change of EG speed ($d\Omega e / dt$) and the accelerator displacement.

Now, description is made of the target torque obtaining section 11d. The target torque obtaining section 11d obtains torque, which is supposed to be transmitted from the drive-side member 41 to the downstream mechanism (the driven-side member 42 herein) in the torque transmission path including the driven-side member 42, in a predetermined sampling cycle during engaging operation of the clutch 40 at start up of the vehicle or when the vehicle is running at speed below a predetermined value. Specifically, the target torque obtaining section 11d obtains the target transmission torque Ttg based on the accelerator displacement. This processing is executed as follows, for example.

The storage unit 12 stores in advance a table that establishes the correspondence between the target transmission torque Ttg and the accelerator displacement by the rider (hereinafter the table is referred to as target transmission torque table). Then, the target torque obtaining section 11d refers to the target transmission torque table to obtain the target transmission torque Ttg that corresponds to the detected accelerator displacement. Alternatively, the storage unit 12 may store an expression that represents the relationship between the accelerator displacement by the rider and the target transmission torque. In this case, the target torque obtaining section 11d substitutes the detected accelerator displacement into the expression in order to calculate the target transmission torque Ttg.

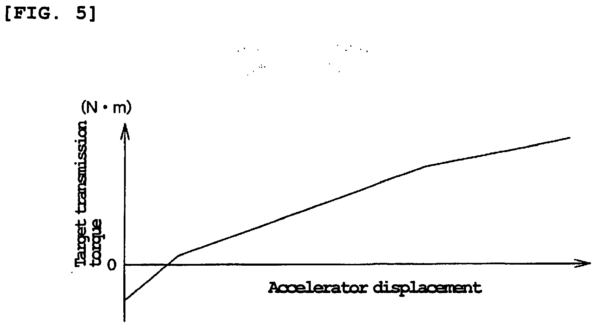

FIG. 5 is a graph showing the relationship between the accelerator displacement and the target transmission torque Ttg obtained from this processing. In the graph, the horizontal axis represents the accelerator displacement, and the vertical axis represents the target transmission torque Ttg. As shown in FIG. 5, the target transmission torque Ttg is preset to be higher as the accelerator displacement becomes larger. Also, when the accelerator displacement is 0, the target transmission torque Ttg is preset at a negative value.

Now, description is made of the clutch actuator control section 11e. The clutch actuator control section 11e actuates the clutch actuator 14 based on the difference between the actual transmission torque Tac and the target transmission torque Ttg in the engaging operation of the clutch 40 when the vehicle starts up or is running at low speeds. This control by the clutch actuator control section 11e allows the clutch 40 to be gradually switched to the engaged state. The clutch actuator control section 11e executes the following processing, for example.

The storage unit 12 stores in advance an expression that represents the relationship between the difference between the target transmission torque Ttg and the actual transmission torque Tac (hereinafter the difference is referred to as torque deviation) and the actuation amount of the clutch actuator 14 (hereinafter the expression is referred to as actuation amount relational expression). Every time the actual torque obtaining section 11a obtains the actual transmission torque Tac (i.e. in a predetermined sampling cycle), the clutch actuator control section 11e calculates the torque deviation. Then, the clutch actuator control section 11e substitutes the calculated torque deviation into the actuation amount relational expression in order to calculate the amount by which the clutch actuator 14 is to be actuated (hereinafter the amount is referred to as command actuation amount), and outputs a control signal to the clutch actuator drive circuit 13 according to the command actuation amount. Then, the clutch actuator drive circuit 13 supplies electric power to drive the clutch actuator 14 according to the control signal. Thereby, the clutch actuator 14 is actuated by an amount according to the command actuation amount.

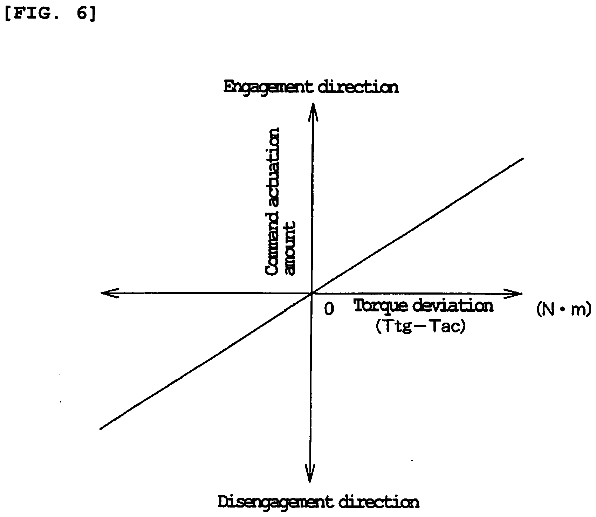

FIG. 6 is a graph showing an example of the relationship between the command actuation amount and the torque deviation (Ttg - Tac) obtained from the actuation amount relational expression. As shown in FIG. 6, the actuation amount relational expression is established such that if the torque deviation (Ttg - Tac) is positive, the clutch actuator 14 is actuated in the direction to engage the clutch 40. In addition, the actuation amount relational expression is established such that the command actuation amount increases in proportion to the torque deviation (Ttg - Tac). The clutch actuator control section 11e substitutes the torque deviation (Ttg - Tac) into this actuation amount relational expression in order to calculate the command actuation amount.

The storage unit 12 stores the actuation amount relational expressions; the one expression is established to actuate the clutch actuator 14 in the direction to engage the clutch 40, if the torque deviation (Ttg - Tac) is positive (hereinafter the expression is referred to as engagement actuation amount relational expression, such as the relational expression shown in FIG. 6), and the other expression is established to actuate the clutch actuator 14 in the opposite direction or the direction to disengage the clutch 40 (hereinafter the expression is referred to as disengagement actuation amount relational expression). The clutch actuator control section 11e selects either the engagement actuation amount relational expression or the disengagement actuation amount relational expression, depending on a positive or negative value of the difference in rotational speed between the drive-side member 41 and the driven-side member 42 (hereinafter referred to as clutch rotational speed difference). Then, the clutch actuator control section 11e substitutes the torque deviation (Ttg - Tac) into the selected actuation amount relational expression in order to calculate the command actuation amount. Specifically, if the clutch rotational speed difference is positive (the rotational speed of the drive-side member 41 is higher than the rotational speed of the driven-side member 42), the clutch actuator control section 11e selects the engagement actuation amount relational expression. Meanwhile, if the clutch rotational speed difference is negative (the rotational speed of the drive-side member 41 is lower than the rotational speed of the driven-side member 42), the clutch actuator control section 11e selects the disengagement actuation amount relational expression.

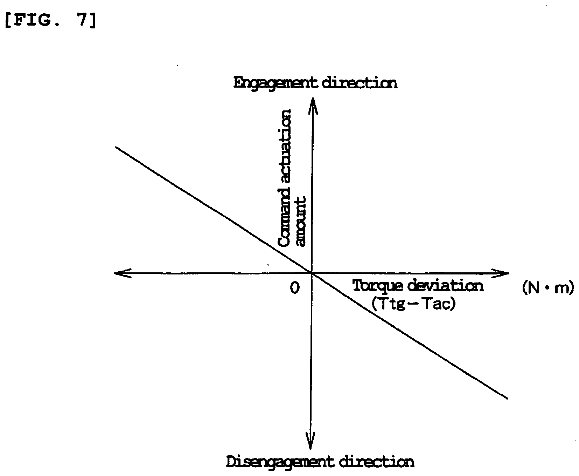

FIG. 7 is a graph showing the relationship between the torque deviation (Ttg - Tac) and the command actuation amount obtained from the disengagement actuation amount relational expression. In the graph shown in FIG. 7, the actuation amount relational expression is established such that if the torque deviation (Ttg - Tac) is positive, the clutch actuator 14 is actuated in the direction to disengage the clutch 40, in contrast to the graph shown in FIG. 6.

In such a manner, the clutch actuator control section 11e selects to use either the engagement actuation amount relational expression or the disengagement actuation amount relational expression, depending on a positive or negative value of the clutch rotational speed difference. This enables an engine brake to be applied at the time when the vehicle starts on the downslope, for example. When the vehicle starts on the downslope, if the accelerator displacement is set at zero, the target transmission torque Ttg is a negative value in the aforementioned target transmission torque table (see FIG. 5). At this moment, if the clutch 40 is disengaged, the actual transmission torque Tac is zero. Therefore, there is a negative difference between the target transmission torque Ttg and the actual transmission torque Tac (Ttg - Tac). In addition, because the vehicle starts on the downslope, if the rotational speed of the drive-side member 41 is lower than the rotational speed of the driven-side member 42, the disengagement actuation amount relational expression is selected. Consequently, a value of the command actuation amount that corresponds to the torque deviation (Ttg - Tac) is to actuate the clutch 40 in the direction to engage the clutch 40, so that the engine brake works.

The relationship between the torque deviation and the command actuation amount is not limited to the relationship shown in FIG. 6 or FIG. 7. For example, the engagement actuation amount relational expression and the disengagement actuation amount relational expression may be established such that the command actuation amount is proportional to the square of the torque deviation.

The storage unit 12 may store a table that establishes the direct correspondence between the command actuation amount, and the target transmission torque Ttg and the actual transmission torque Tac, rather than the engagement actuation amount relational expression and the disengagement actuation amount relational expression that establish the correspondence between the torque deviation and the command actuation amount. In this case, the clutch actuator control section 11e refers to the table to directly obtain the command actuation amount that corresponds to the calculated target transmission torque Ttg and actual transmission torque Tac.

Now, description is made of the failure detecting section 11f. The failure detecting section 11f implements the processing for detecting a failure of the clutch 40 (for example, a displacement of the clutch position due to excessive wear-out of the drive-side member 41 or the driven-side member 42, or due to bubbles formed within the hydraulic hose 20b). In the embodiment of the present teaching, the failure detecting section 11f determines whether or not the vehicle operating conditions satisfy a predetermined condition (hereinafter referred to as failure detection implementation condition). If the failure detection implementation condition is satisfied, the failure detecting section 11f implements the processing for detecting a failure of the clutch 40 based on the actual transmission torque Tac and the clutch position Pc detected by the clutch position detector 22. As described above, the failure detecting section 11f includes the condition determining section 11g. Description is first made of the processing executed by the condition determining section 11g.

The condition determining section 11g determines whether or not the vehicle operating conditions satisfy the failure detection implementation condition. The failure detection implementation condition is designed to determine whether or not the vehicle operating conditions are appropriate to implementing the processing for detecting a failure of the clutch 40. For example, the failure detection implementation condition is so defined as to implement the processing for detecting a failure of the clutch 40 under the conditions that the clutch 40 and the clutch actuator 14 move moderately, and that there is generally a proportional relationship between the clutch position Pc and the actual transmission torque Tac. The failure detection implementation condition is more specifically described below.

For example, the failure detection implementation condition relates to the vehicle speed. The condition determining section 11g determines whether or not the vehicle speed detected by the vehicle speed signal is lower than a predetermined value (hereinafter referred to as vehicle speed condition value (several kilometers per hour)). Then, if the vehicle speed is lower than the vehicle speed condition value, the condition determining section 11g determines that the failure detection implementation condition is satisfied.

The failure detection implementation condition may include a condition related to the clutch rotational speed difference. In this case, for example, the condition determining section 11g calculates the rotational speed of the drive-side member 41 based on the signal from the clutch rotational speed detector 23a, while calculating the rotational speed of the driven-side member 42 based on the signal from the clutch rotational speed detector 23b. Then, the condition determining section 11g determines whether or not the difference in rotational speed therebetween or the clutch rotational speed difference is greater than a predetermined value (hereinafter referred to as rotational speed difference condition value). If the clutch rotational speed difference is greater than the rotational speed difference condition value, the condition determining section 11g determines that the failure detection implementation condition is satisfied.

This allows the processing for detecting a failure of the clutch 40 to be implemented under the operating condition that there is a corresponding relationship between the actual transmission torque Tac and the clutch position Pc. More specifically, under the condition that the clutch rotational speed difference is greater than the rotational speed difference condition value (the drive-side member 41 and the driven-side member 42 slip each other, while both rotating), the actual transmission torque Tac is dynamic friction force produced between the drive-side member 41 and the driven-side member 42. The dynamic friction force is proportional to pressing force produced therebetween, using a coefficient of dynamic friction between the drive-side member 41 and the driven-side member 42 as a proportionality constant. The pressing force is determined depending on the clutch position Pc (displacement of the clutch spring 44). Thus, under the condition that the clutch rotational speed difference is greater than the rotational speed difference condition value, the actual transmission torque Tac corresponds to the clutch position Pc. In the event when a failure has occurred, such as excessive wear-out of the drive-side member 41 or the driven-side member 42 and bubbles formed in the oil within the hydraulic hose 20a, the actual transmission torque Tac and the clutch position Pc deviate from the relationship between the actual transmission torque Tac and the clutch position Pc under no failure condition. Thus, under such operating condition that there is a corresponding relationship between the actual transmission torque Tac and the clutch position Pc, the failure detecting section 11f determines if a failure has occurred to the clutch 40 based on the actual transmission torque Tac, which is actually detected during engaging operation of the clutch 40, and based on the extent of the deviation of the corresponding clutch position Pc. This processing executed by the failure detecting section 11f will be discussed in details later.

The failure detection implementation condition may include a condition related to the amount of the actual transmission torque Tac. In this case, for example, the condition determining section 11g determines whether or not the actual transmission torque Tac, which is obtained from the processing executed by the actual torque obtaining section 11a, is higher than a predetermined value (hereinafter referred to as actual transmission torque condition value). If the actual transmission torque Tac is higher than the actual transmission torque condition value, the condition determining section 11g determines that the failure detection implementation condition is satisfied. Under the condition of extremely low actual transmission torque Tac, that is, low degree of contact between the drive-side member 41 and the driven-side member 42, the actual transmission torque Tac is affected by the inclination of a disk that forms the drive-side member 41 or the driven-side member 42, the amount of oil adhering to the disk, surface roughness of the disk, and the like. The failure detection implementation condition includes the condition related to the amount of the actual transmission torque Tac, which minimizes the impact of the inclination of the disk and the like on the detection of a failure of the clutch 40.

Further, the failure detection implementation condition may include a condition related to the difference between the actual transmission torque Tac and the target transmission torque Ttg obtained by the target torque obtaining section 11d or the torque deviation (Ttg - Tac). In this case, the condition determining section 11g determines whether or not the torque deviation is smaller than a predetermined value (hereinafter referred to as torque deviation condition value). If the torque deviation (Ttg - Tac) is smaller than the torque deviation condition value, the condition determining section 11g determines that the failure detection implementation condition is satisfied. This allows the processing for detecting a failure of the clutch 40 to be implemented when the clutch 40 moves moderately.

Still further, the failure detection implementation condition may include a condition related to the time period required for engaging operation of the clutch 40. For example, the storage unit 12 stores in advance a table that establishes the correspondence between the time period estimated to be required for engaging operation of the clutch 40, and the vehicle speed and the target transmission torque Ttg. In this table, for example, the time period estimated to be required for engaging operation of the clutch 40 is preset to be longer as the vehicle speed becomes lower or the target transmission torque Ttg becomes higher. In this case, the condition determining section 11g refers to the table to obtain the estimated time period that corresponds to the vehicle speed, which is detected based on the vehicle speed signal from the vehicle speed detector 19, and to the target transmission torque Ttg, which is obtained by the target torque obtaining section 11d. Then, the condition determining section 11g determines whether or not the obtained estimated time period is longer than a predetermined time period. Then, if the estimated time period is longer than the predetermined time period, the condition determining section 11g determines that the failure detection implementation condition is satisfied.

Now, description is made of the processing executed by the failure detecting section 11f in order to detect a failure of the clutch 40. When the aforementioned failure detection implementation condition is satisfied, the failure detecting section 11f implements the processing for detecting a failure of the clutch 40 based on the actual transmission torque Tac and the clutch position Pc. This processing is executed as follows, for example.

The storage unit 12 stores in advance a table or a relational expression that represents the relationship between the actual transmission torque Tac and the clutch position Pc.

Then, the failure detecting section 11f refers to the table or the relational expression stored in the storage unit 12 to determine whether or not there is an appropriate relationship between the actual transmission torque Tac, which is obtained by the actual torque obtaining section 11a, and the clutch position Pc, which is detected by the clutch position detector 22. Based on the determination result, the failure detecting section 11f detects if a failure has occurred to the clutch 40.

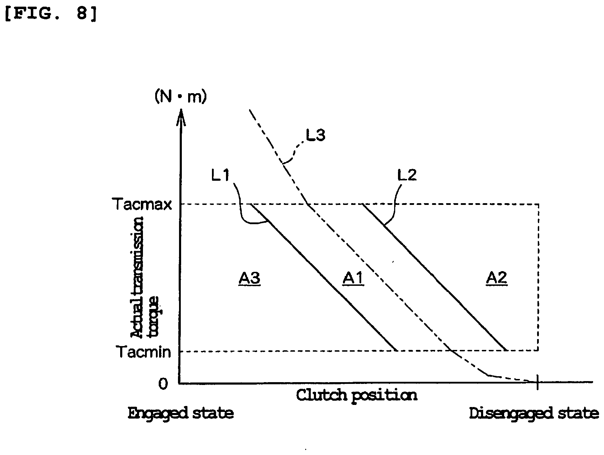

FIG. 8 is a table illustrating an example of the relationship between the actual transmission torque Tac and the clutch position Pc (hereinafter the table is referred to as failure determination table). In FIG. 8, the horizontal axis represents the clutch position Pc, and the vertical axis represents the actual transmission torque Tac. In addition, the disengagement position along the horizontal axis represents the clutch position at the time when the clutch 40 is completely disengaged, while the engagement position along the horizontal axis represents the clutch position at the time when the clutch 40 is engaged. As shown in FIG. 8, in the failure determination table, for example, the range of the clutch position PC within which no failure is observed is sequentially preset corresponding to the actual transmission torque Tac. Specifically, a minimum value (a value on the line L1 in FIG. 8 (hereinafter referred to as minimum allowable position)) and a maximum value (a value on the line L2 in FIG. 8 (hereinafter referred to as maximum allowable position)) of the clutch position PC at which no failure is observed are sequentially preset corresponding to the actual transmission torque Tac. As shown by the lines L1 and L2 in FIG. 8, the maximum allowable position and the minimum allowable position, which correspond to the actual transmission torque Tac, are preset such that as the actual transmission torque Tac increases, these allowable positions respectively come close to the engagement position. The maximum allowable position and the minimum allowable position also correspond to the actual transmission torque Tac that is between the aforementioned actual transmission torque condition value Tacmin and the upper limit value Tacmax of the actual transmission torque Tac.

The phantom line L3 in FIG. 8 shows the relationship between the actual transmission torque Tac and the clutch position Pc when the clutch 40 is in the best condition, such as when the clutch 40 starts to be in service. The minimum allowable position is preset closer to the engagement position than the clutch position PC when the clutch 40 is in the best condition. The maximum allowable position is preset closer to the disengagement position than the clutch position Pc when the clutch 40 is in the best condition.

If the storage unit 12 stores the failure determination table as shown in FIG. 8, the failure detecting section 11f determines whether or not the clutch position Pc, which is detected, for example, based on the signal inputted from the clutch position detector 22, falls within a range between the minimum allowable position and the maximum allowable position that correspond to the actual transmission torque Tac obtained from the processing executed by the actual torque obtaining section 11a (the clutch position Pc is included in a region between the line L1 and the line L2 (hereinafter referred to as allowable clutch region A1)). Then, if the detected clutch position Pc falls outside the allowable clutch region A1, the failure detecting section 11f determines that a failure has occurred to the clutch 40, and informs the rider of the occurrence of the failure by means of, for example, lighting up the alarm light on the indicator 6a (see FIG. 3).

Alternatively, the failure detecting section 11f may determine whether or not the detected clutch position Pc is closer to the disengagement position than the maximum allowable position that corresponds to the actual transmission torque Tac obtained from the processing executed by the actual torque obtaining section 11a (the clutch position Pc is included in a region on the right side of the line L2 in FIG. 8 (hereinafter referred to as engagement degree exceeding region A2)). In other words, the failure detecting section 11f may determine whether or not a point (Pc, Tac), which corresponds to the detected clutch position Pc and the actual transmission torque Tac in the failure determination table, is included in the engagement degree exceeding region A2. When the point (Pc, Tac) is included in the engagement degree exceeding region A2, the clutch position is closer to the disengagement position than in a normal state, while torque is transmitted via the clutch 40 by an amount which is the same as in a normal state. Thus, the degree of engagement of the clutch 40 is higher than when the clutch 40 is a normal state, in terms of the same clutch position. Such excessive degree of the engagement of the clutch 40 is caused due to, for example, bubbles formed within the hydraulic hose 20a.

Alternatively, the failure detecting section 11f may determine whether or not the detected clutch position Pc is closer to the engagement position than the minimum allowable position that corresponds to the actual transmission torque Tac obtained from the processing executed by the actual torque obtaining section 11a (the clutch position Pc is included in a region on the left side of the line L1 in FIG. 8 (hereinafter referred to as engagement degree lacking region A3)). In other words, the failure detecting section 11f may determine whether or not a point (Pc, Tac), which corresponds to the detected clutch position Pc and the actual transmission torque Tac in the failure determination table, is included in the engagement degree lacking region A3. When the point (Pc, Tac) is included in the engagement degree lacking region A3, the clutch position is closer to the engagement position than in a normal state, while torque is transmitted via the clutch 40 by an amount which is the same as in a normal state. Thus, the degree of engagement of the clutch 40 is lower than when the clutch 40 is a normal state, in terms of the same clutch position. Such lowered degree of engagement of the clutch 40 is caused due to, for example, excessive wear-out of the drive-side member 41 or the driven-side member 42.

If the result of such determination shows that the point (Pc, Tac), which corresponds to the actual transmission torque Tac and the clutch position Pc in the failure determination table, is included in the engagement degree exceeding region A2 or in the engagement degree lacking region A3, the failure detecting section 11f determines that a failure has occurred to the clutch 40, and informs the rider of the occurrence of the failure by means of, for example, lighting up the alarm light on the indicator 6a (see FIG. 3). Alternatively, the failure detecting section 11f may light up the indicator 6a in different modes depending on if the point (Pc, Tac), which corresponds to the actual transmission torque Tac and the clutch position Pc, is included in the engagement degree exceeding region A2 or in the engagement degree lacking region A3. This allows the rider to estimate the type of failure occurring to the clutch 40, for example, whether or not the drive-side member 41 or the driven-side member 42 wear-out excessively or bubbles are formed within the hydraulic hose 20a.

Further alternatively, while the failure detection implementation condition is satisfied, the failure detecting section 11f may determine several times whether or not the point (Pc, Tac), which corresponds to the actual transmission torque Tac and the clutch position Pc in the failure determination table, is included in the allowable clutch region A1 or the like in a predetermined cycle. Then, the failure detecting section 11f may determine the presence or absence of a failure of the clutch 40 based on the frequency with which the point (Pc, Tac) is determined not to be included in the allowable clutch region A1 or based on the frequency with which the point (Pc, Tac) is determined to be included in the engagement degree exceeding region A2 or in the engagement degree lacking region A3.

For example, while the failure detection implementation condition is satisfied, the failure detecting section 11f obtains the clutch position Pc and the actual transmission torque Tac a predetermined number of times, and determines whether or not each clutch position Pc falls within a range between the minimum allowable position and the maximum allowable position which correspond to the actual transmission torque Tac. Then, the failure detecting section 11f counts the number of times that the detected clutch position Pc is determined not to fall within the range between the minimum allowable position and the maximum allowable position which correspond to the actual transmission torque Tac (hereinafter the number of times is referred to as number of times of failure). Then, if the ratio of the number of times of failure to the total number of times of determination exceeds a predetermined value, the failure detecting section 11f may determine that a failure has occurred to the clutch 40.

In the case of implementing such processing, the failure detecting section 11f may inform the rider of the severity of the failure occurring to the clutch 40 based on the ratio of the number of times of failure to the total number of times of determination. For example, the failure detecting section 11f may gradually change the display mode of the indicator 6a, such as the size or brightness of the lighting area thereon, depending on the ratio of the number of times of failure to the total number of times of determination.

In addition, the information on the relationship between the actual transmission torque Tac and the clutch position, which is provided for the processing for detecting a failure of the clutch 40, is not limited to the aforementioned failure determination table shown in FIG. 8. For example, the storage unit 12 may store a relational expression that represents the relationship between the actual transmission torque Tac and the minimum allowable position or a relational expression that represents the relationship between the actual transmission torque Tac and the maximum allowable position. Thus, the failure detecting section 11f may substitute the actual transmission torque Tac obtained from the processing executed by the actual torque obtaining section 11a into the relational expression as such, and determine whether or not the detected clutch position Pc is closer to the disengagement position than the maximum allowable position corresponding to the obtained actual transmission torque Tac or whether or not the detected clutch position Pc is closer to the engagement position than the minimum allowable position corresponding to the obtained actual transmission torque Tac.

Now, description is made of the shift actuator control section 11h. When the rider operates the shift-up switch 9a or the shift-down switch 9b to provide gear shifting instructions, the shift actuator control section 11h changes the shift gears 53a, 53b, 54a, 54b to transmit torque. Specifically, the shift actuator control section 11h outputs a control signal to the shift actuator drive circuit 15 according to the gear shifting instructions. The shift actuator drive circuit 15 outputs electric power to drive the shift actuator 16 according to the control signal.

When the rider provides start-up or gear shifting instructions, the clutch actuator control section 11e actuates the clutch actuator 14 to temporarily disengage the clutch 40 in order to interrupt torque transmission from the drive-side member 41 to the driven-side member 42. The shift actuator control section 11h moves the shift gears 53a, 53b, 54a or 54b in order to set the gear shift in a position designated by the rider's operation of the shift-up button 9a or the shift-down button 9b. After detecting that the shift gears 53a, 53b, 54a or 54b have been already moved based on the signal inputted from the gear position detector 21, the clutch actuator control section 11e starts engaging operation of the clutch 40.

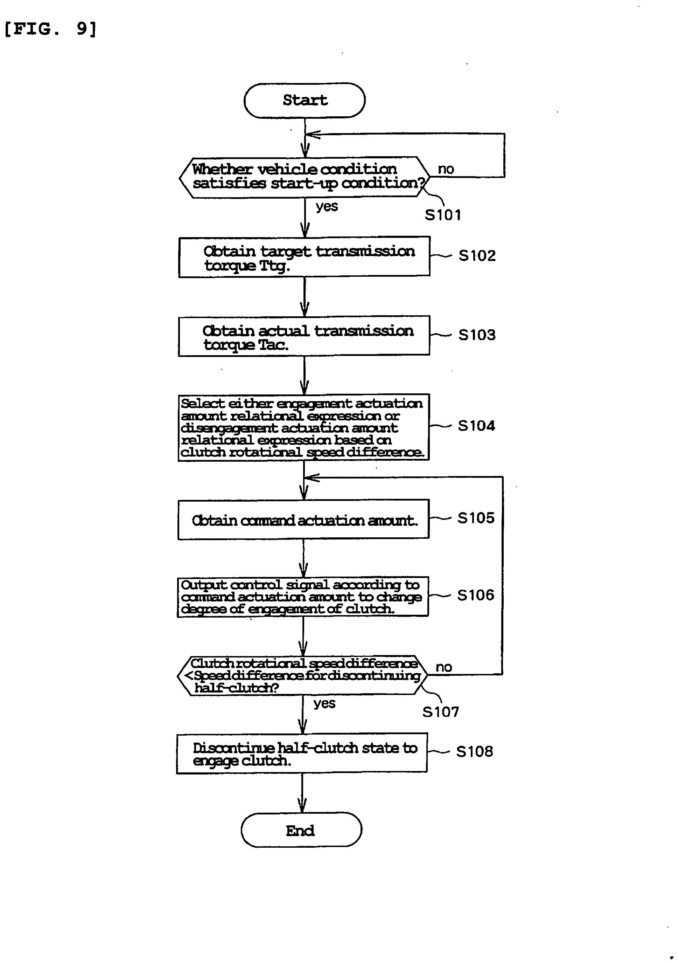

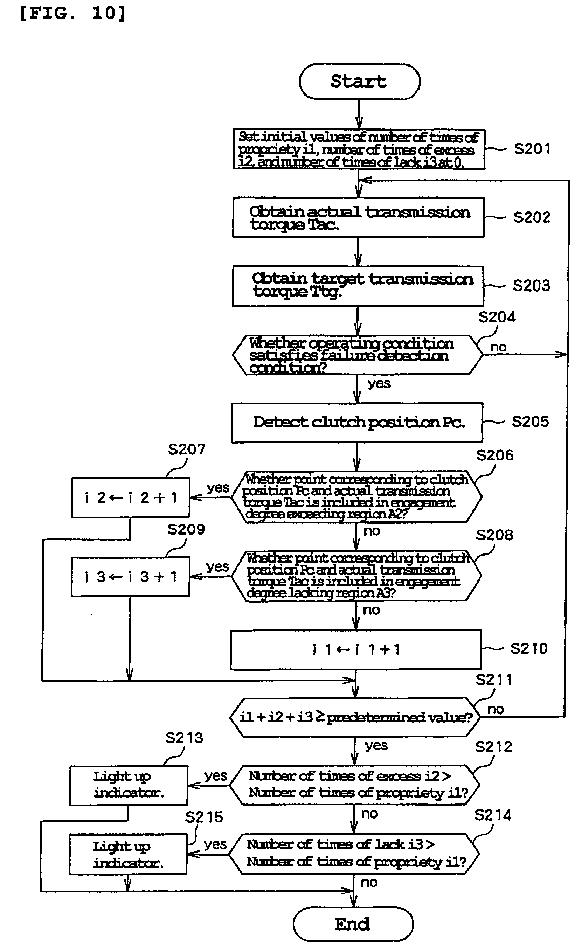

Now, with reference to FIG. 9 and FIG. 10, description is made of a flow of the processing executed by the control unit 11. FIG. 9 is a flowchart showing an example of the processing steps executed by the control unit 11 in order to control the degree of engagement of the clutch 40. FIG. 10 is a flowchart showing an example of the processing steps executed by the control unit 11 in order to detect a failure of the clutch 40.

First, with reference to FIG. 9, description is made of the processing steps executed in order to control the degree of engagement of the clutch 40. The control unit 11 first determines whether or not the vehicle operating conditions satisfy predetermined start-up conditions (step S101). The start-up conditions are that: for example, the clutch 40 is disengaged, with the gearbox 51 set in a position other than neutral position; the engine speed and the accelerator displacement are equal to or greater than their respective predetermined values; and the vehicle speed is below the vehicle speed condition value. Alternatively, continuation of these conditions for a given time period or longer may also be a predetermined start-up condition.

In the step S101, if the vehicle operating conditions are determined to satisfy the start-up conditions, the target torque obtaining section 11d detects the accelerator displacement, and refers to the aforementioned target transmission torque table (see FIG. 5) to obtain the target transmission torque Ttg that corresponds to the accelerator displacement (step S102).

In turn, the actual torque obtaining section 11a obtains the actual transmission torque Tac transmitted from the drive-side member 41 to the driven-side member 42 (step S103). Further, the clutch actuator control section 11e calculates the clutch rotational speed difference based on the signals inputted from the clutch rotational speed detectors 23a, 23b. Depending on a positive or negative value of the calculated clutch rotational speed difference, the clutch actuator control section 11e selects either one of the aforementioned engagement actuation amount relational expression and disengagement actuation amount relational expression (step S104). Specifically, if the clutch rotational speed difference is positive (the rotational speed of the drive-side member 41 is higher than the rotational speed of the driven-side member 42), the clutch actuator control section 11e selects the engagement actuation amount relational expression. Meanwhile, if the clutch rotational speed difference is negative, the clutch actuator control section 11e selects the disengagement actuation amount relational expression.

Then, the clutch actuator control section 11e substitutes the difference between the target transmission torque Ttg and the actual transmission torque Tac or the torque deviation (Ttg - Tac) into the selected engagement actuation amount relational expression or disengagement actuation amount relational expression in order to obtain the command actuation amount (step S105). Then, the clutch actuator control section 11e outputs a control signal to the clutch actuator drive circuit 15 according to the command actuation amount in order to change the degree of engagement of the clutch 40 (step S106).

After that, the clutch actuator control section 11e recalculates the clutch rotational speed difference, and determines whether or not the recalculated clutch rotational speed difference is smaller than a predetermined value (hereinafter referred to as speed difference for discontinuing half-clutch) (step S107). In this step, if the clutch rotational speed difference is equal to or greater than the speed difference for discontinuing half-clutch, the control unit 11 returns to the step S105 to execute the subsequent processing steps again. In contrast, if the clutch rotational speed difference is smaller than the speed difference for discontinuing half-clutch, the control unit 11 discontinues the half-clutch state of the clutch 40 to completely engage the drive-side member 41 with the driven-side member 42 (step S108). The aforementioned processing is an example of the processing executed by the control unit 11 at vehicle start-up.

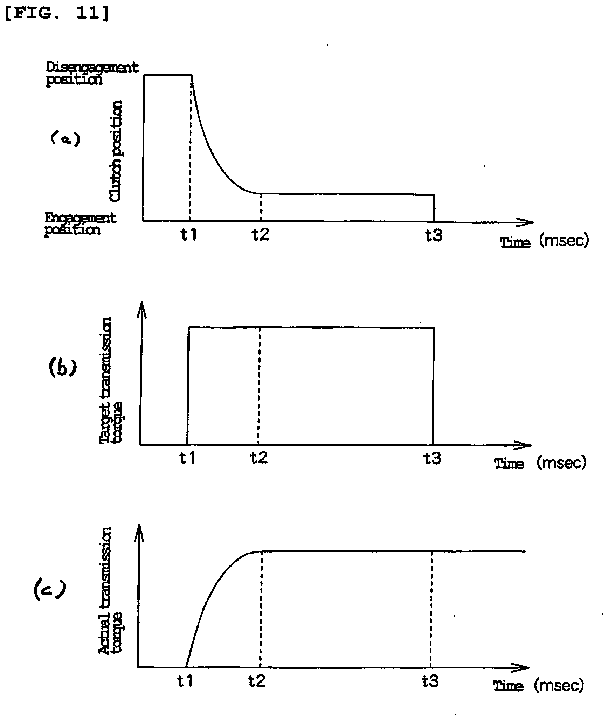

FIGs. 11(a) to 11(c) are time charts respectively showing examples of changes in clutch position Pc, actual transmission torque Tac and target transmission torque Ttg with respect to time, due to the processing executed by the control unit 11 when the vehicle starts up. FIG. 11(a) shows the clutch position Pc. FIG. 11(b) shows the target transmission torque Ttg. FIG. 11(c) shows the actual transmission torque Tac. In FIGs. 11 (a) to 11(c), the horizontal axis represents time. As shown in FIGs. 11(a) and 11(c), at the stage prior to the vehicle start-up, the clutch position Pc is set at a position at which the clutch 40 is disengaged (the disengagement position in FIG. 11(a)), and the actual transmission torque Tac is zero. After that, when the start-up conditions are satisfied and the rider operates the throttle, the target transmission torque Ttg is set according to the rider's throttle operation, as shown in FIG. 11(b) (at the time t1). This creates the difference between the target transmission torque Ttg and the actual transmission torque Tac or the torque deviation (Ttg - Tac). Under the control by the clutch actuator control section 11e, engaging operation of the clutch 40 starts. Then, the clutch actuator 14 is actuated by an actuation amount according to the torque deviation (Ttg - Tac). As shown in FIG. 11 (a), the clutch position Pc gradually approaches the position at which the clutch 40 is engaged (the engagement position in FIG. 11(a)). Consequently, the actual transmission torque Tac corresponds with the target transmission torque Ttg at the time t2. Then, at the time (t3) when the clutch rotational speed difference is below the speed difference for discontinuing half-clutch, the clutch 40 is completely engaged. Because the actual transmission torque Tac corresponds with the target transmission torque Ttg from the time t2 to the time t3, the clutch position Pc is generally maintained.

Now, with reference to FIGs. 11(a) to 11(c), description is made of an example of the processing executed by the control unit 11 in order to detect a failure of the clutch 40. The description is herein made of the case, as an example, where the processing for detecting a failure of the clutch 40 is implemented during engaging operation of the clutch 40 for the vehicle start-up. In addition, the description is made of the case, as an example, where while the failure detection implementation condition is satisfied, the control unit 11 detects the actual transmission torque Tac and the clutch position Pc several times, counts the respective numbers of times that the point (Pc, Tac), which corresponds to the detected actual transmission torque Tac and clutch position Pc in the failure determination table, falls within the allowable clutch region A1 (hereinafter referred to as number of times of propriety i1), that the point (Pc, Tac) falls within the engagement degree exceeding region A2 (hereinafter referred to as number of times of excess i2), and that the point (Pc, Tac) falls within the engagement degree lacking region A3 (hereinafter referred to as number of times of lack i3), and determines the presence or absence of a failure of the clutch 40 based on these numbers of times.

First, the failure detecting section 11f sets the initial values of the number of times of propriety i1, the number of times of excess i2, and the number of times of lack i3 at zero, respectively (step S201). After that, the actual torque obtaining section 11a obtains the actual transmission torque Tac (step S202), and the target torque obtaining section 11d obtains the target transmission torque Ttg (step S203). Then, the condition determining section 11g determines whether or not the vehicle operating conditions satisfy the failure detection implementation condition (step S204). Specifically, the condition determining section 11g determines whether or not the vehicle operating conditions satisfy the aforementioned start-up conditions, whether or not the actual transmission torque Tac is higher than the actual transmission torque condition value, whether or not the difference between the target transmission torque Ttg and the actual transmission torque Tac is smaller than the torque deviation condition value, and whether or not the clutch rotational speed difference is greater than the rotational speed difference condition value. As described above, the start-up conditions include that the vehicle speed is below the vehicle speed condition value. In this step, if the failure detection implementation condition is not yet satisfied, the control unit 11 returns to the step S202 to execute the subsequent processing steps again.

In contrast, if the failure detection implementation condition is satisfied, the failure detecting section 11f starts the processing for determining the presence or absence of a failure of the clutch 40. Specifically, the failure detecting section 11f detects the clutch position Pc (step S205), and determines whether or not the point (Pc, Tac), which corresponds to the detected clutch position Pc and the actual transmission torque Tac obtained in the step S202, is included in the engagement degree exceeding region A2 (step S206). In this step, if the point (Pc, Tac) is included in the engagement degree exceeding region A2, the failure detecting section 11f increments the number of times of excess i2 (step S207). In contrast, if the point (Pc, Tac) is not included in the engagement degree exceeding region A2, the failure detecting section 11f determines whether or not the point (Pc, Tac) is included in the engagement degree lacking region A3 (step S208). In this step, if the point (Pc, Tac) is included in the engagement degree lacking region A3, the failure detecting section 11f increments the number of times of lack i3 (step S209). Further, if the point (Pc, Tac) is not included in the engagement degree lacking region A3, the failure detecting section 11f increments the number of times of propriety i1 (step S210).

The failure detecting section 11f determines whether or not the number of times of determination, in the steps S206 and S208, whether or not the point (Pc, Tac), which corresponds to the clutch position Pc and the actual transmission torque Tac, is included in the engagement degree exceeding region A2 or in the engagement degree lacking region A3 (i.e. the number of times of propriety i1 + the number of times of excess i2 + the number of times of lack i3) is equal to or greater than a predetermined number of times (step S211). In this step, if the number of times of the determination does not reach the predetermined number of times, the control unit 11 returns to the step S202 to execute the subsequent processing steps again.

In contrast, if the number of times of the determination in the steps S206 and S208 is equal to or greater than the predetermined number of times, the failure detecting section 11f determines whether or not the counted number of times of excess i2 exceeds the number of times of propriety i1 (step S212). In this step, if the number of times of excess i2 exceeds the number of times of propriety i1, a failure has occurred to the clutch 40. That is, the clutch position is greater (closer to the disengagement position) than in a normal state, and torque is transmitted to the driven-side member 42 by an amount which is the same as in a normal state (for example, bubbles are formed within the hydraulic hose 20a). Thus, the failure detecting section 11f lights up the indicator 6a in order to inform the rider of the occurrence of the failure (step S213). In contrast, if the number of times of excess i2 does not exceed the number of times of propriety i1, the failure detecting section 11f determines whether or not the number of times of lack i3 exceeds the number of times of propriety i1 (step S214). In this step, if the number of times of lack i3 exceeds the number of times of propriety i1, a failure has occurred to the clutch 40. That is, the clutch position is smaller (closer to the engagement position) than in a normal state, and torque is transmitted to the driven-side member 42 by an amount which is the same as in a normal state (for example, wear-out of the drive-side member 41 or the driven-side member 42). In this case, the failure detecting section 11f lights up the indicator 6a in order to inform the rider of the occurrence of the failure (step S215). The failure detecting section 11f may light up the indicator 6a in different modes in the step S213 and the step S215.

If the determination result from the step S214 shows that the number of times of lack i3 does not exceed the number of times of propriety i1, the failure detecting section 11f determines that no failure occurs to the clutch 40, and ends the processing.

In the example of the processing shown in FIG. 10, whether or not the point (Pc, Tac), which corresponds to the actual transmission torque Tac and the clutch position Pc in the failure determination table, is included in the engagement degree exceeding region A2 or in the engagement degree lacking region A3 is determined while the failure detection implementation condition is satisfied. This determination is made between the time t2 and the time t3 in the time charts shown in FIGs. 11(a) to 11(c), in the case where the rotational speed difference condition value is preset equal to the aforementioned speed difference for discontinuing half-clutch, and the torque deviation condition value is preset at zero or close to zero as the failure detection implementation condition. The presence or absence of a failure is thus determined under the operating condition that the clutch position Pc changes insignificantly.

The above-mentioned failure detection system 10 detects a failure of the clutch 40 based on the actual transmission torque Tac and the clutch position Pc. This enables accurate detection of a failure of the clutch 40. The clutch failure detection is achieved, for example, independent of the gradient of the slope.

In the failure detection system 10, the actual torque obtaining section 11a calculates the actual transmission torque Tac based on the EG torque TEac outputted from the engine 30 and based on the EG-side inertia torque Tlac produced on the mechanism upstream of the drive-side member 41 in the torque transmission path. The actual transmission torque is thus obtained by such simple processing without using any specific sensor or the like for directly detecting torque.

In addition, in the failure detection system 10, the failure detecting section 11f determines whether or not the vehicle operating conditions satisfy the predetermined failure detection implementation condition, and based on the determination result, implements the processing for detecting a failure of the clutch 40. This allows the processing for detecting a failure of the clutch 40 to be implemented in a situation where accurate detection of the failure is practicable.

The failure detection implementation condition includes the condition related to the vehicle speed (hereinbefore referred to as vehicle speed condition value). This allows the processing for detecting a failure of the clutch 40 to be implemented when the half-clutch state is continued relatively longer, such as when the vehicle starts up or is running at low speeds, and therefore enhances the accuracy of the failure detection.

The failure detection implementation condition also includes the condition related to the difference in rotational speed between the drive-side member 41 and the driven-side member 42 of the clutch 40 (hereinbefore referred to as rotational speed difference condition value). Thereby, under the operating condition that there is a corresponding relationship between the actual transmission torque Tac and the clutch position Pc, the failure detecting section 11f determines the presence or absence of a failure of the clutch 40 based on whether or not the relationship between the actual transmission torque Tac and the clutch position Pc, which are actually detected during engaging operation of the clutch 40, is appropriate.

The failure detection implementation condition further includes the condition related to the amount of the actual transmission torque Tac (hereinbefore referred to as actual transmission torque condition value). As described above, under the condition of low actual transmission torque Tac, that is, low degree of contact between the drive-side member 41 and the driven-side member 42, the actual transmission torque Tac is significantly affected by the inclination of a disk that forms the drive-side member 41 or the driven-side member 42, the amount of oil adhering to the disk, surface roughness of the disk, and the like. Thus, including the condition related to the amount of the actual transmission torque Tac into the failure detection implementation condition allows the processing for detecting a failure of the clutch 40 to be implemented under the operating condition that the impact of the inclination of the disk and the like on the actual transmission torque Tac is insignificant. This therefore enhances the accuracy of the failure detection.

The control unit 11 actuates the clutch actuation mechanism 20 according to the difference between the actual transmission torque Tac and the target transmission torque Ttg that is supposed to be transmitted from the drive-side member 41 to the driven-side member 42, in order to control the relative positions of the drive-side member 41 and the driven-side member 42. The failure detection implementation condition includes the condition related to the difference between the target transmission torque Ttg and the actual transmission torque Tac (hereinbefore referred to as torque deviation condition value). This allows the processing for detecting a failure of the clutch 40 to be implemented when the difference is small between the actual transmission torque Tac and the target transmission torque Ttg and when the clutch position Pc changes moderately, and therefore enhances the accuracy of the failure detection.

The storage unit 12 holds in advance the information on the relationship between the actual transmission torque Tac and the clutch position Pc (hereinbefore referred to as failure determination table). Thus, based on the actual transmission torque Tac obtained by the actual torque obtaining section 11a, and based on the clutch position Pc obtained by the clutch position detector 22, the failure detecting section 11f refers to the information stored in advance in the storage unit 12 to detect a failure of the clutch 40. This allows the presence of absence of a failure of the clutch 40 to be determined based on the discrepancy between the pre-estimated appropriate relationship between the actual transmission torque Tac and the clutch position Pc, and the relationship between the actually-detected actual transmission torque Tac and clutch position Pc.

In addition, the failure detecting section 11f obtains the clutch position Pc and the actual transmission torque Tac several times in the process that the clutch 40 is switched from the disengaged state to the engaged state. Based on the several data of the clutch position Pc and the actual transmission torque Tac, the failure detecting section 11f detects a failure of the clutch 40. This enhances the accuracy of the failure detection.

The present invention is not limited to the above-mentioned failure detection system 10 and can have various alternatives. The above-mentioned failure determination table is a two-dimensional table that allows the range of the clutch position Pc within which no failure is observed to sequentially correspond to the actual transmission torque Tac. However, the failure determination table is not limited to this and, for example, may allow the range of the clutch position Pc within which no failure is observed to correspond to one value of the actual transmission torque Tac or several values of the actual transmission torque Tac preset in a discrete manner. In the case that such a failure determination table is established, the failure detecting section 11f detects the clutch position Pc when the actual transmission torque Tac transmitted from the drive-side member 41 to the driven-side member 42 during engaging operation of the clutch 40 reaches the actual transmission torque Tac preset in the failure determination table. Then, the failure detecting section 11f determines whether or not the detected clutch position Pc falls within the preset range of the clutch position in the failure determination table.

In the above description, when the vehicle starts up or is running at low speeds, the processing for detecting a failure of the clutch 40 is implemented. However, the failure detecting section 11f may obtain the actual transmission torque Tac during engaging operation of the clutch 40 for gear shifting, and based on the obtained actual transmission torque Tac and the clutch position Pc, determine the presence or absence of a failure of the clutch 40. In this case, the failure detecting section 11f may implement the processing for detecting a failure of the clutch 40 at the time of the shift-down operation that requires a relatively longer time period for the engaging operation of the clutch 40 than at the time of the shift-up operation.

The motorcycle 1 is provided with the engine 30 as a driving source. Alternatively, the driving source may be an electric motor or a hybrid engine combining an electric motor and an engine.

In addition, in the above description, the failure detection system 10 and the clutch 40 apply to the motorcycle 1. However, the above-mentioned failure detection system 10 may apply to four-wheeled automobiles.

The description above discloses (amongst others) in order to solve the foregoing problems, an embodiment of a clutch failure detection system including: a clutch actuation mechanism for changing relative positions of a drive-side member and a driven-side member of a clutch; a position detector for detecting a position of the clutch actuation mechanism as a clutch position; a torque obtaining section for obtaining torque transmitted from the drive-side member to a downstream mechanism in a torque transmission path as transmission torque, the downstream mechanism including the driven-side member; and a failure detecting section for detecting a failure of the clutch based on the transmission torque and the clutch position.

In addition, in order to solve the foregoing problems, there is disclosed a straddle-type vehicle including the clutch failure detection system.

Further, in order to solve the foregoing problems, there is disclosed an embodiment of a method for detecting a failure including the steps of: detecting a position of a clutch actuation mechanism for changing relative positions of a drive-side member and a driven-side member of a clutch as a clutch position; obtaining torque transmitted from the drive-side member to a downstream mechanism in a torque transmission path as transmission torque, the downstream mechanism including the driven-side member; and detecting a failure of the clutch based on the transmission torque and the clutch position.

The present teaching allows to reduce the impact of the road gradient on the detection of a clutch failure. More specifically, the torque, which is transmitted from the drive-side member to the driven-side member of the clutch in a half-clutch state, is generally determined depending on the clutch position, independent of the road gradient. Thus, the present teaching allows a clutch failure to be detected based on the transmission torque and the clutch position, even when a vehicle runs on a slope. The straddle-type vehicle may be a motorcycle (including a scooter), a four-wheeled buggy, a snowmobile or a two-wheeled electric vehicle, for example.

The description above in particular discloses, in order to provide a failure detection system for accurately detecting a failure occurring to a clutch, an embodiment of a failure detection system 10 which includes: a clutch actuation mechanism 20 for changing the relative positions of a drive-side member 41 and a driven-side member 42 of a clutch 40; a position detector 22 for detecting a position of the clutch actuation mechanism 20 as a clutch position; and a control unit 11 for obtaining torque transmitted from the drive-side member 41 to the driven-side member 42 as actual transmission torque, wherein the control unit 11 detects a failure of the clutch 40 based on the actual transmission torque and the clutch position.

The description further discloses an embodiment of a clutch failure detection system comprising: a clutch actuation mechanism for changing relative positions of a drive-side member and a driven-side member of a clutch; a position detector for detecting a position of the clutch actuation mechanism as a clutch position; a torque obtaining section for obtaining torque transmitted from the drive-side member to a downstream mechanism in a torque transmission path as transmission torque, the downstream mechanism including the driven-side member; and a failure detecting section for detecting a failure of the clutch based on the transmission torque and the clutch position.

Further, it discloses an embodiment of a clutch failure detection system, wherein the torque obtaining section calculates the transmission torque based on torque outputted from a driving source and inertia torque produced in a mechanism upstream of the drive-side member in the torque transmission path.

Further, it discloses an embodiment of a clutch failure detection system, wherein the failure detecting section determines whether or not a vehicle operating condition satisfies a predetermined condition, and based on the determination result, implements the processing for detecting a failure of the clutch.

Further, it discloses an embodiment of a clutch failure detection system, wherein the predetermined condition relates to a vehicle speed.

Further, it discloses an embodiment of a clutch failure detection system, wherein the predetermined condition relates to a difference in rotational speed between the drive-side member and the driven-side member of the clutch.

Further, it discloses an embodiment of a clutch failure detection system, wherein the predetermined condition relates to an amount of the transmission torque.

Further, it discloses an embodiment of a clutch failure detection system, further comprising: a control unit for actuating the clutch actuation mechanism according to a difference between the transmission torque and target torque that is supposed to be transmitted from the drive-side member to the downstream mechanism in order to control the relative positions, wherein the predetermined condition relates to the difference between the target torque and the transmission torque.

Further, it discloses an embodiment of a clutch failure detection system, further comprising: a storage unit for storing in advance information on the relationship between the transmission torque and the clutch position, wherein the failure detecting section refers to the information stored in the storage unit based on the transmission torque, which is obtained by the torque obtaining section, and the clutch position, which is obtained by the position detector, to detect a failure of the clutch.

Further, it discloses an embodiment of a clutch failure detection system, wherein the failure detecting section obtains the clutch position and the transmission torque several times in the process that the clutch is switched from a disengaged state to an engaged state, and based on several data of the clutch position and the actual transmission torque, detects a failure of the clutch.

Further, it discloses an embodiment of a straddle-type vehicle comprising the clutch failure detection system according to one of the above embodiments.

Further, it discloses an embodiment of a method for detecting a clutch failure comprising the steps of: detecting a position of a clutch actuation mechanism for changing relative positions of a drive-side member and a driven-side member of a clutch as a clutch position; obtaining torque transmitted from the drive-side member to a downstream mechanism in a torque transmission path as transmission torque, the downstream mechanism including the driven-side member; and detecting a failure of the clutch based on the transmission torque and the clutch position.

**Claims**

1. Vehicle having

   a clutch (40) provided in a torque transmission path;
   a clutch actuation mechanism (14) for changing relative positions of a drive-side member and a driven-side member of the clutch;
   a clutch position detector (22) for detecting a position of the clutch actuation mechanism (14) as a clutch position (Pc);
   a torque obtaining section for obtaining torque transmitted from the drive-side member to a downstream mechanism in the torque transmission path as an actual transmission torque (Tac), the downstream mechanism including the driven-side member; and
   a failure detecting section (11f) for detecting a failure of the clutch (40) based on the transmission torque (Tac) and the clutch position (Pc), **characterized in that** the failure detecting section (11f) includes a condition determining section (11g) for determining whether or not a vehicle operating condition satisfies a predetermined condition, and based on the determination result, the failure detection section (11f) implements the processing for detecting a failure of the clutch;

      - the predetermined condition relates to a vehicle speed, or the predetermined condition relates to a difference in rotational speed between the drive-side member and the driven-side member of the clutch, or wherein the predetermined condition relates to an amount of the actual transmission torque, or
      - it is provided a control unit (11) for actuating the clutch actuation mechanism according to a difference between the actual transmission torque and the target transmission torque that is supposed to be transmitted from the drive-side member to the downstream mechanism in order to control the relative positions, wherein the predetermined condition relates to the difference between the target torque and the transmission torque.

2. Vehicle according to claim 1, **characterized in that** the torque obtaining section is configured to calculate the actual transmission torque (Tac) based on torque outputted from a driving source and inertia torque produced in a mechanism upstream of the drive-side member in the torque transmission path.

3. Vehicle according to claim 1 or 2, **characterized by** a storage unit for storing in advance information on the relationship between the actual transmission torque and the clutch position, wherein the failure detecting section refers to the information stored in the storage unit based on the actual transmission torque, which is obtained by the torque obtaining section, and the clutch position, which is obtained by the position detector, to detect a failure of the clutch.

4. Vehicle according to one of the claims 1 to 3, **characterized in that** the failure detecting section obtains the clutch position and the transmission torque several times in the process that the clutch is switched from a disengaged state to an engaged state, and based on several data of the clutch position and the actual transmission torque, detects a failure of the clutch.

5. Method for detecting a clutch failure comprising the steps of:

   detecting a position of a clutch actuation mechanism for changing relative positions of a drive-side member and a driven-side member of a clutch as a clutch position;
   obtaining torque transmitted from the drive-side member to a downstream mechanism in a torque transmission path as transmission torque, the downstream mechanism including the driven-side member; and
   detecting a failure of the clutch based on the transmission torque and the clutch position, **characterized by** determining whether or not a vehicle operating condition satisfies a predetermined condition, and based on the determination result, implementing the processing for detecting a failure of the clutch,

      - the predetermined condition relates to a vehicle speed, or the predetermined condition relates to a difference in rotational speed between the drive-side member and the driven-side member of the clutch, or wherein the predetermined condition relates to an amount of the actual transmission torque, or

- actuating the clutch actuation mechanism according to a difference between the actual transmission torque and the target transmission torque that is supposed to be transmitted from the drive-side member to the downstream mechanism in order to control the relative positions, wherein the predetermined condition relates to the difference between the target torque and the transmission torque.

**Patentansprüche**

1. Fahrzeug mit

   einer Kupplung (40), die in einem Drehmomentübertragungsweg vorgesehen ist;
   einen Kupplungsbetätigungsmechanismus (14) zum Ändern der relativen Positionen eines antriebsseitigen Elements und eines abtriebsseitigen Elements der Kupplung;
   einen Kupplungspositionsdetektor (22) zum Erfassen einer Position des Kupplungsbetätigungsmechanismus (14) als eine Kupplungsposition (Pc);
   einen Drehmomenterfassungsabschnitt zum Erfassen des Drehmoments, das von dem antriebsseitigen Element an einen stromabwärts gelegenen Mechanismus im Drehmomentübertragungsweg übertragenen als tatsächliches Übertragungsdrehmoment (Tac), der stromabwärts gelegene Mechanismus enthält das antriebsseitige Element; und
   einen Fehlererfassungsabschnitt (11f) zum Erfassen eines Fehlers der Kupplung (40) auf der Grundlage des Übertragungsdrehmoments (Tac) und der Kupplungsposition (Pc), **dadurch gekennzeichnet, dass** der Fehlererfassungsabschnitt (11f) einen Bedingungsbestimmungsabschnitt (11g) enthält, zum Bestimmen, ob eine Fahrzeugbetriebsbedingung eine vorbestimmte Bedingung erfüllt oder nicht, und auf der Grundlage des Bestimmungsergebnisses der Fehlererfassungsabschnitt (11f) die Verarbeitung zum Erfassen eines Fehlers der Kupplung implementiert;

   - die vorbestimmte Bedingung sich auf eine Fahrzeuggeschwindigkeit bezieht, oder die vorbestimmte Bedingung sich auf einen Drehzahlunterschied zwischen dem antriebsseitigen Element und dem abtriebsseitigen Element der Kupplung bezieht, oder wobei die vorbestimmte Bedingung sich auf einen Betrag des tatsächlichen Übertragungsdrehmoments bezieht, oder
   - eine Steuereinheit (11) zur Ansteuerung des Kupplungsbetätigungsmechanismus in Abhängigkeit von einer Differenz zwischen dem Ist-Übertragungsdrehmoment und dem Soll-Übertragungsdrehmoment, das von dem antriebsseitigen Element auf den nachgeschalteten Mechanismus übertragen werden soll, vorgesehen ist, um die Relativpositionen zu steuern, wobei sich die vorgegebene Bedingung auf die Differenz zwischen dem Soll-Drehmoment und dem Übertragungsdrehmoment bezieht.

2. Fahrzeug gemäß Anspruch 1, **dadurch gekennzeichnet, dass** der Drehmomenterfassungsabschnitt konfiguriert ist, um das tatsächliche Übertragungsdrehmoment (Tac) auf der Grundlage des Drehmoments, das von einer Antriebsquelle abgegeben ist, und des Trägheitsmoments, das in einem Mechanismus stromaufwärts des antriebsseitigen Elements im Drehmomentübertragungsweg erzeugt wird, berechnet.

3. Fahrzeug gemäß Anspruch 1 oder 2, **gekennzeichnet durch** eine Speichereinheit zum Speichern von Informationen über die Beziehung zwischen dem tatsächlichen Übertragungsdrehmoment und der Kupplungsposition im Voraus, wobei der Fehlererkennungsabschnitt sich auf die Informationen bezieht, die in der Speichereinheit gespeichert sind, auf der Grundlage des tatsächlichen Übertragungsdrehmoments, das durch den Drehmomenterfassungsabschnitt ermittelt wird, und der Kupplungsposition, die durch den Positionsdetektor ermittelt wird, um einen Fehler der Kupplung zu erkennen.

4. Fahrzeug gemäß einem der Ansprüche 1 bis 3, **dadurch gekennzeichnet, dass** der Fehlererkennungsabschnitt die Kupplungsposition und das Übertragungsdrehmoment mehrmals während des Vorgangs erfasst, bei dem die Kupplung von einem ausgerückten Zustand in einen eingerückten Zustand geschaltet wird, und auf der Grundlage mehrerer Daten der Kupplungsposition und des aktuellen Übertragungsdrehmoments einen Fehler der Kupplung erkennt.

5. Verfahren zum Erkennen eines Kupplungsfehlers, das die folgenden Schritte umfasst:

   Erfassen einer Position eines Kupplungsbetätigungsmechanismus zur Änderung der relativen Positionen eines antriebsseitigen Elements und eines abtriebsseitigen Elements einer Kupplung als Kupplungsposition;

Erhalten des Drehmoments, das von dem antriebsseitigen Element auf einen stromabwärts gelegenen Mechanismus in einem Drehmomentübertragungsweg übertragen wird, als Übertragungsdrehmoment, der stromabwärts gelegene Mechanismus enthält das abtriebsseitige Element; und
Erfassen eines Fehlers der Kupplung auf der Grundlage des Übertragungsdrehmoments und der Kupplungsposition, **gekennzeichnet durch** Bestimmen, ob ein Fahrzeugbetriebszustand eine vorbestimmte Bedingung erfüllt oder nicht, und auf der Grundlage des Bestimmungsergebnisses, Implementieren der Verarbeitung zum Erfassen eines Fehlers der Kupplung,

- die vorbestimmte Bedingung sich auf eine Fahrzeuggeschwindigkeit bezieht, oder die vorbestimmte Bedingung sich auf einen Drehzahlunterschied zwischen dem antriebsseitigen Element und dem abtriebsseitigen Element der Kupplung bezieht, oder wobei die vorbestimmte Bedingung sich auf einen Betrag des tatsächlichen Übertragungsdrehmoments bezieht, oder
- Betätigen des Kupplungsbetätigungsmechanismus in Abhängigkeit von einer Differenz zwischen dem Ist-Übertragungsdrehmoment und dem Soll-Übertragungsdrehmoment, das von dem antriebsseitigen Element auf den nachgeschalteten Mechanismus übertragen werden soll, um die Relativpositionen zu steuern, wobei sich die vorbestimmte Bedingung auf die Differenz zwischen dem Soll-Drehmoment und dem Übertragungsdrehmoment bezieht.

## Revendications

1.  Véhicule comportant

    un embrayage (40) pourvu dans une voie de transmission de couple ;
    un mécanisme d'actionnement de l'embrayage (14) pour changer les positions relatives d'un élément côté entraînement et d'un élément côté entraîné de l'embrayage ;
    un détecteur de position de l'embrayage (22) pour détecter une position du mécanisme d'actionnement de l'embrayage (14) en tant que position de l'embrayage (Pc) ;
    une section d'obtention de couple pour obtenir un couple transmis de l'élément côté entraînement à un mécanisme aval dans la voie de transmission de couple en tant que couple de transmission actuel (Tac), le mécanisme aval comprenant l'élément côté entraîné ; et
    une section de détection de panne (11f) pour détecter une panne de l'embrayage (40) sur la base du couple de transmission (Tac) et de la position de l'embrayage (Pc),
    **caractérisé en ce que** la section de détection de panne (11f) comprend une section de détermination de condition (11g) pour déterminer si une condition de fonctionnement du véhicule répond ou non à une condition prédéterminée, et sur la base du résultat de la détermination, la section de détection de panne (11f) met en œuvre le traitement de détection d'une panne de l'embrayage ;

    - la condition prédéterminée se rapporte à une vitesse du véhicule, ou la condition prédéterminée se rapporte à une différence de vitesse de rotation entre l'élément côté entraînement et l'élément côté entraîné de l'embrayage, ou dans lequel la condition prédéterminée se rapporte à la quantité de couple de transmission actuel, ou
    - une unité de contrôle (11) est pourvue pour actionner le mécanisme d'actionnement de l'embrayage en fonction d'une différence entre le couple de transmission actuel et le couple de transmission cible qui est censé être transmis de l'élément côté entraînement au mécanisme aval afin de contrôler les positions relatives, dans lequel la condition prédéterminée se rapporte à la différence entre le couple cible et le couple de transmission.

2.  Véhicule selon la revendication 1, **caractérisé en ce que** la section d'obtention de couple est configurée pour calculer le couple de transmission actuel (Tac) sur la base du couple délivré par une source d'entraînement et du couple d'inertie produit dans un mécanisme en amont de l'élément côté entraînement dans la voie de transmission de couple.

3.  Véhicule selon la revendication 1 ou 2, **caractérisé par** une unité de stockage pour stocker à l'avance de l'information sur la relation entre le couple de transmission actuel et la position de l'embrayage, dans lequel la section de détection de panne se rapporte à l'information stockée dans l'unité de stockage sur la base du couple de transmission actuel, qui est obtenu par la section d'obtention de couple, et de la position de l'embrayage, qui est obtenue par le détecteur de position, pour détecter une panne de l'embrayage.

**4.** Véhicule selon l'une des revendications 1 à 3, **caractérisé en ce que** la section de détection de panne obtient la position de l'embrayage et le couple de transmission plusieurs fois au cours du processus de commutation de l'embrayage d'un état désengagé à un état engagé, et détecte une panne de l'embrayage sur la base de plusieurs données de la position de l'embrayage et du couple de transmission actuel.

**5.** Procédé de détection d'une panne de l'embrayage comprenant les étapes suivantes :

détection d'une position d'un mécanisme d'actionnement de l'embrayage pour modifier les positions relatives d'un élément côté entraînement et d'un élément côté entraîné d'un embrayage en tant que position de l'embrayage ;
obtention d'un couple transmis de l'élément côté entraînement à un mécanisme aval dans une voie de transmission de couple en tant que couple de transmission, le mécanisme aval comprenant l'élément côté entraîné ; et
détection d'une panne de l'embrayage sur la base du couple de transmission et de la position de l'embrayage, **caractérisé par** la détermination du fait qu'une condition de fonctionnement du véhicule répond ou non à une condition prédéterminée, et sur la base du résultat de la détermination, la mise en œuvre du traitement pour détecter une panne de l'embrayage,

- la condition prédéterminée se rapporte à une vitesse du véhicule, ou la condition prédéterminée se rapporte à une différence de vitesse de rotation entre l'élément côté entraînement et l'élément côté entraîné de l'embrayage, ou dans lequel la condition prédéterminée se rapporte à la quantité de couple de transmission actuel, ou
- actionnement du mécanisme d'actionnement de l'embrayage en fonction d'une différence entre le couple de transmission actuel et le couple de transmission cible censé être transmis de l'élément côté entraînement au mécanisme aval afin de contrôler les positions relatives, dans lequel la condition prédéterminée se rapporte à la différence entre le couple cible et le couple de transmission.

[FIG. 1]

[FIG. 2]

[FIG. 3]

[FIG. 4]

```
                                              11
                                            ┌─────────────────────────────────┐
                                            │  ┌───────────────────────────┐  │
                                            │  │ Actual torque obtaining section │──── 11a
                                            │  │  ┌─────────────────────┐  │  │
                                            │  │  │ EG torque obtaining section │──── 11b
                                            │  │  └─────────────────────┘  │  │
                                            │  │  ┌─────────────────────┐  │  │
                                            │  │  │ Inertia torque obtaining │──── 11c
                                            │  │  │ section             │  │  │
                                            │  │  └─────────────────────┘  │  │
                                            │  └───────────────────────────┘  │
                                            │  ┌───────────────────────────┐  │
                                            │  │ Target torque obtaining    │──── 11d
                                            │  │ section                   │  │
                                            │  └───────────────────────────┘  │
                                            │  ┌───────────────────────────┐  │
                                            │  │ clutch actuator control    │──── 11e
                                            │  │ section                   │  │
                                            │  └───────────────────────────┘  │
                                            │  ┌───────────────────────────┐  │
                                            │  │ Failure detecting section  │──── 11f
                                            │  │  ┌─────────────────────┐  │  │
                                            │  │  │ Condition determining │──── 11g
                                            │  │  │ section             │  │  │
                                            │  │  └─────────────────────┘  │  │
                                            │  └───────────────────────────┘  │
                                            │  ┌───────────────────────────┐  │
                                            │  │ Shift actuator control     │──── 11h
                                            │  │ section                   │  │
                                            │  └───────────────────────────┘  │
                                            └─────────────────────────────────┘
```

[FIG. 5]

[FIG. 6]

[FIG. 7]

[FIG. 8]

[FIG. 9]

EP 1 975 445 B1

[FIG. 10]

```
                    ┌─────────┐
                    │  Start  │
                    └────┬────┘
                         │
        ┌────────────────▼─────────────────┐
        │ Set initial values of number of  │
        │ times of propriety i1, number of │──  S201
        │ times of excess i2, and number   │
        │ of times of lack i3 at 0.        │
        └────────────────┬─────────────────┘
                         │◄──────────────────────────────┐
        ┌────────────────▼─────────────────┐             │
        │ Obtain actual transmission       │──  S202      │
        │ torque Tac.                      │             │
        └────────────────┬─────────────────┘             │
        ┌────────────────▼─────────────────┐             │
        │ Obtain target transmission       │──  S203      │
        │ torque Ttg.                      │             │
        └────────────────┬─────────────────┘     S204     │
                  ◄──────▼──────►                          │
              Whether operating condition      no          │
              satisfies failure detection ─────────────►   │
              condition?                                   │
                  │ yes                                     │
        ┌─────────▼──────────┐                             │
        │ Detect clutch      │──  S205                      │
        │ position Pc.       │                             │
        └─────────┬──────────┘          S206                │
S207              ◄──────▼──────►                           │
┌──────────┐ yes  Whether point corresponding to clutch    │
│ i2←i2+1  │◄──── position Pc and actual transmission       │
└────┬─────┘      torque Tac is included in engagement      │
     │            degree exceeding region A2?               │
     │                   │ no              S208              │
S209 │             ◄─────▼──────►                           │
┌──────────┐ yes  Whether point corresponding to clutch     │
│ i3←i3+1  │◄──── position Pc and actual transmission        │
└────┬─────┘      torque Tac is included in engagement       │
     │            degree lacking region A3?                  │
     │                   │ no                                 │
     │         ┌─────────▼──────────┐                         │
     │         │    i1←i1+1         │──  S210                  │
     │         └─────────┬──────────┘       S211               │
     └────────►──────────┤                                     │
                    ◄────▼────►  no                             │
             i1+i2+i3≥predetermined value? ────────────────────┘
                         │ yes          S212
S213            ◄────────▼────────►
┌──────────┐ yes  Number of times of excess i2 >
│ Light up │◄──── Number of times of propriety i1?
│ indicator│                │ no         S214
└────┬─────┘      ◄──────────▼──────────►
S215            yes  Number of times of lack i3 >
┌──────────┐◄──── Number of times of propriety i1?
│ Light up │                 │ no
│ indicator│      ┌──────────▼──────────┐
└────┬─────┘      │        End          │
     └───────────►└─────────────────────┘
```

31

[FIG. 11]

(a)

Disengagement position

Clutch position

Engagement position

t1      t2                    t3      Time (msec)

(b)

Target transmission torque

t1      t2                    t3      Time (msec)

(c)

Actual transmission torque

t1      t2                    t3      Time (msec)

**EP 1 975 445 B1**

## REFERENCES CITED IN THE DESCRIPTION

**Patent documents cited in the description**

- EP 1681496 A2

- JP HEI756299 B